# FASCICULE DE BREVET EUROPEEN

(11) **EP 3 970 352 B1**
(45) Date de publication et mention de la délivrance du brevet: **26.06.2024**
(21) Numéro de dépôt: 20723129.1
(22) Date de dépôt: 05.05.2020
(51) Int. Cl.: H04L 9/40

(54) **PROCEDE ET DISPOSITIF DE TRAITEMENT D'UNE DEMANDE D'ANONYMISATION D'UNE ADRESSE IP SOURCE, PROCEDE ET DISPOSITIF DE DEMANDE D'ANONYMISATION D'UNE ADRESSE IP SOURCE**
VERFAHREN UND VORRICHTUNG ZUR VERARBEITUNG EINER ANFORDERUNG ZUR ANONYMISIERUNG EINER QUELL-IP-ADRESSE, VERFAHREN UND VORRICHTUNG ZUR ANFORDERUNG EINER ANONYMISIERUNG EINER QUELL-IP-ADRESSE
METHOD AND DEVICE FOR PROCESSING A REQUEST FOR ANONYMISATION OF A SOURCE IP ADDRESS, METHOD AND DEVICE FOR REQUESTING ANONYMISATION OF A SOURCE IP ADDRESS

(30) Priorité: 13.05.2019 FR 1904960
(43) Date de publication de la demande: 23.03.2022
(73) Titulaire: Orange, 92130 Issy-les-Moulineaux (FR)
(72) Inventeur: BOUVET, Bertrand, 92326 CHÂTILLON CEDEX (FR)
(74) Mandataire: Cabinet Beau de Loménie
(86) Numéro de dépôt international: PCT/EP2020/062386
(87) Numéro de publication internationale: WO 2020/229219

(56) Documents cités:
- US-A1- 2017 155 678
- US-B1- 7 391 768
- LEXI PIMENIDIS ET AL: "Transparent Anonymization of IP Based Network traffic", NORDSEC 2005, 20 octobre 2005 (2005-10-20), - 21 octobre 2005 (2005-10-21), pages 116-121, XP002797818, Tartu, Estonia

## Description

### Technique antérieure

L'invention se rapporte au domaine général des télécommunications. Elle concerne plus particulièrement le domaine d'anonymisation de paramètres relatifs à un émetteur de trafic IP.

Lorsqu'un terminal envoie un paquet IP à un dispositif de destination, ce dispositif peut utiliser des paramètres de ce paquet pour obtenir des informations sur le terminal et sur l'utilisateur du terminal.

A titre d'exemples, l'adresse IP source de ce paquet IP peut constituer un indice sur la géolocalisation du terminal ou sur l'opérateur auprès duquel le terminal est souscrit. Le numéro de port source du paquet peut, dans certains cas, représenter une indication sur l'application ayant généré ce paquet. Le champ http « User Agent » présent dans une entête de couche applicative web encapsulée dans le paquet IP représente une information sur le navigateur web installé sur le terminal et utilisé lors de la génération du paquet IP par le terminal. Le champ « Referer », si présent aussi dans une entête de couche applicative web, comporte un identifiant d'un site web consulté par l'utilisateur du terminal et à partir duquel une demande de la session web courante a été générée. De même, le champ « cookies » si présent dans une entête de couche applicative web permet aux sites web consultés de tracer de nombreuses informations sur le terminal, permettant par exemple de pousser de la publicité contextuelle vers le navigateur du terminal en fonction d'autres sites web déjà consultés ou bien encore de générer des données personnelles d'usage telles que la comptabilisation de pages web consultés ou la fréquence d'accès à un site web.

En particulier, l'adresse MAC concaténée à un préfixe IPv6 comporte une information sur le constructeur du terminal ou sur sa carte d'interface réseau.

Le dispositif récepteur du paquet IP peut utiliser les informations déduites des paramètres du paquet IP pour envoyer au terminal des données ciblées, par exemple des publicités en fonction de la géolocalisation du terminal. L'utilisateur du terminal ne souhaite pas nécessairement recevoir ces données ou publicités ciblées ; il peut considérer que ceci constitue une atteinte à sa vie privée.

Le dispositif récepteur peut aussi utiliser les informations obtenues à partir des paramètres du paquet IP de façon malveillante, par exemple pour pirater des informations personnelles de l'utilisateur du terminal émetteur.

Il existe donc un besoin pour pouvoir anonymiser certains paramètres de trafic IP généré par le terminal, en particulier l'adresse IP source du trafic IP.

En adressage IPv4, on connaît une solution basée sur une fonction de traduction d'adresses NAT (pour « Network Address Translation » en anglais) ou NAPT (pour « Network Address Port Translation» en anglais).

Lorsque la fonction NAT ou NAPT est mise en oeuvre par un équipement de terminaison de réseau auquel le terminal est connecté, il peut aussi être nécessaire d'anonymiser l'adresse IP de l'équipement de terminaison de réseau car elle peut donner une indication sur la géolocalisation du terminal et sur le fournisseur Internet auprès duquel un abonnement Internet est souscrit pour connecter l'équipement. De ce fait, cette solution n'est pas satisfaisante.

Nous notons aussi que cette solution n'est pas envisageable pour un adressage IPv6.

On connaît une autre solution, applicable en IPv4 et en IPv6, qui consiste à placer un serveur proxy dans le réseau, en coupure de flux entre le terminal et le dispositif de destination. Lorsque ce serveur proxy reçoit un paquet IP, il remplace l'adresse IP source de ce paquet IP par sa propre adresse IP, puis transfère le paquet IP vers le dispositif de destination.

Le serveur proxy peut aussi remplacer le numéro de port source du paquet IP par son numéro de port de sortie.

Le serveur proxy permet de masquer l'adresse IP et le numéro de port du terminal vis-à-vis du dispositif destinataire, ces informations étant remplacées par les siennes. Contrairement à un équipement de terminaison de réseau qui met en oeuvre une fonction NAT ou NAPT, l'adresse IP du serveur proxy ne constitue pas une indication sur la localisation du terminal.

Le serveur proxy peut aussi modifier, supprimer, voire ajouter du contenu de certains champs protocolaires des couches applicatives, c'est-à-dire des paramètres inclus dans des entêtes de couches applicatives, encapsulées dans le paquet IP. Par exemple, le serveur proxy peut modifier la valeur du champ « User Agent » ou la valeur du champ « Referer ». Le serveur proxy intègre une fonction de type ALG (pour « Application Layer Gateway » en anglais) pour modifier, supprimer ou ajouter un contenu aux entêtes de couches applicatives.

Néanmoins, utiliser un serveur proxy nécessite de configurer au sein d'un navigateur web du terminal des paramètres du serveur proxy, pour que le trafic émis par le terminal vers le dispositif de destination passe via le serveur proxy. La configuration du navigateur du terminal comporte un enregistrement de l'adresse IP (ou d'un nom FQDN, pour « Fully Qualified Domain Name » en anglais) et du numéro de port de destination du serveur proxy.

Ces paramètres du serveur proxy (adresse IP et numéro de port) ne sont pas toujours fournis par l'opérateur du réseau aux utilisateurs de terminaux.

De plus, une telle configuration requiert que l'utilisateur du terminal ait certaines connaissances techniques. Cette solution présente alors des difficultés d'implémentation pour le grand public. C'est pourquoi, l'utilisation de Proxy s'applique essentiellement dans les entreprises.

Il est à noter aussi que la configuration du serveur proxy doit être faite au niveau du terminal, pour chaque navigateur web installé sur le terminal.

Un autre inconvénient de l'utilisation d'un serveur proxy est que cette solution ne s'applique qu'aux applications pour lesquelles il est possible de configurer le serveur proxy, typiquement les applications navigateur Internet. Cette solution ne s'applique notamment pas à des applications mobiles fonctionnant totalement ou partiellement en mode WebView. On rappelle qu'une application qui fonctionne en mode WebView permet de télécharger le contenu de pages web disponibles sur un serveur web et de les afficher au sein même de l'interface homme machine de l'application.

Un autre inconvénient de l'utilisation d'un serveur proxy est que cette solution ne s'applique qu'à un nombre limité de protocoles de niveau applicatif tels que HTTP (pour « Hyper Text Transfer Protocol » en anglais), FTP (pour « File Transfer Protocol » en anglais).

Une autre solution consiste à installer un logiciel client VPN (pour « Virtual Private Network » en anglais) au niveau du terminal et à router tout le trafic IP envoyé par le terminal, c'est-à-dire issus de toutes les applications présentes sur le terminal, quel que soit le protocole applicatif, à un dispositif de destination via un serveur VPN. Le serveur VPN fonctionne globalement de la même façon qu'un serveur proxy mais en plus, le trafic échangé entre le client VPN installé sur le terminal et le serveur VPN est chiffré dans les deux sens de trafic IP. Un tunnel IP est créé entre le client VPN du terminal et le serveur VPN, dans lequel les paquets IP sont encapsulés et cryptés.

Cette solution présente des inconvénients similaires à ceux de la solution basée sur l'utilisation d'un serveur proxy : nécessité de télécharger puis de configurer un logiciel client VPN au niveau du terminal avec l'adresse IP et le numéro de port du serveur VPN.

De plus, la solution VPN présente d'autres inconvénients : les logiciels VPN sont généralement payants, ils ne garantissent aucune qualité de service ; ces logiciels VPN ne permettent aucun traitement au niveau des couches applicatives pour pouvoir modifier et/ou supprimer et/ou ajouter des informations telles que les champs User Agent, Referer, ou Cookies ; le chiffrement de trafic empêche l'opérateur du réseau d'effectuer une interception légale de ce trafic; le chiffrement et le déchiffrement demandent de la mémoire, de la capacité de calcul CPU et du temps de calcul, ce qui engendre un surplus de consommation d'énergie, un surplus de latence de transfert des paquets IP; l'encapsulation des paquets envoyés par le terminal pour être envoyés via le tunnel IP augmente la latence de transfert de ces paquets et peut nécessiter plus de bande passante au niveau du réseau d'accès. En outre, certains fournisseurs de services VPN peuvent eux-mêmes analyser le trafic IP décrypté de leurs utilisateurs et revendre et/ou exploiter eux-mêmes des informations déduites de cette analyse du trafic IP.

US 7 391 768 divulgue l'anonymisation d'un paquet suivant une étape de vérification pour déterminer si ladite adresse IP source dudit paquet doit être anonymisée. Si le paquet doit être anonymisé le dispositif d'anonymisation traduit l'adresse, si le paquet ne doit pas être anonymisé le dispositif d'anonymisation route le paquet vers le dispositif destinataire.

LEXI PIMENIDIS ET ALdans "Transparent Anonymization of IP Based Network traffic",NORDSEC 2005, 20 octobre 2005 (2005-10-20), divulgue un procédé d'anonymisation en se basant sur l'utilisation d'un réseau d'anonymisation IP virtuel.

Il existe donc un besoin en une solution permettant de protéger les données personnelles de l'utilisateur du terminal et qui ne présente pas les inconvénients des solutions de l'art antérieur.

### Exposé de l'invention

L'invention vise un procédé de traitement d'une demande d'anonymisation d'une adresse IP source d'un paquet IP émis par un dispositif émetteur vers un dispositif destinataire via un réseau de communication selon la revendication 1.

Corrélativement, l'invention vise un dispositif d'anonymisation configuré pour traiter une demande d'anonymisation d'une adresse IP source d'un paquet IP émis par un dispositif émetteur vers un dispositif destinataire via un réseau de communication selon la revendication 12.

Le dispositif d'anonymisation au sens de l'invention est apte à détecter si l'adresse IP source d'un paquet IP doit être anonymisée on non, mais il ne réalise pas nécessairement lui-même cette anonymisation.

Dans un mode de réalisation, le dispositif d'anonymisation conforme à l'invention dispose d'un module de traduction d'adresses configuré pour remplacer l'adresse IP source par une adresse IP du dispositif d'anonymisation.

Dans un mode autre mode de réalisation, le dispositif d'anonymisation peut ne comporter aucun module de traduction d'adresse ou comporter un module de traduction d'adresse qui est mis en veille ou configuré pour ne pas fonctionner sous certaines conditions.

Les caractéristiques et avantages du procédé de traitement d'une demande d'anonymisation selon l'invention présentés ci-après s'appliquent de la même façon au dispositif d'anonymisation selon l'invention et vice versa.

Le dispositif d'anonymisation conforme à l'invention peut mettre en oeuvre le procédé de traitement d'une demande d'anonymisation conforme à l'invention.

L'invention permet de ne pas informer le dispositif de destination et/ou son utilisateur de l'adresse IP du dispositif émetteur ou de l'équipement de terminaison de réseau. Le dispositif de destination et/ou une application installée sur le dispositif de destination et/ou l'utilisateur du dispositif de destination ne pourra donc pas déduire des informations sur la géolocalisation du dispositif émetteur, ni sur l'opérateur auquel le dispositif émetteur est abonné.

Lorsque le dispositif d'anonymisation n'est pas compris dans le dispositif de destination, l'adresse IP source du paquet IP est anonymisée même pour le dispositif de destination.

Lorsque le dispositif d'anonymisation est compris dans le dispositif de destination, l'adresse IP source du paquet IP est remplacée après la réception du paquet IP par l'interface réseau du dispositif de destination, et avant la présentation du paquet à une application installée sur le dispositif de destination et/ou l'utilisateur du dispositif de destination.

L'invention n'exige pas une configuration d'informations nécessaires à l'usage d'un serveur proxy ou à un serveur VPN au niveau du dispositif émetteur.

L'invention permet d'anonymiser l'adresse IP source d'un paquet IP, même s'il a été généré par une application mobile fonctionnant partiellement ou totalement en mode WebView.

L'invention permet d'anonymiser l'adresse IP source d'un paquet IP, quel que soit le type du terminal, quelle que soit l'application ayant généré le paquet IP, et quel que soit le protocole applicatif.

L'équipement de terminaison de réseau peut être le dispositif émetteur en soi, ou une passerelle permettant de connecter le dispositif émetteur audit réseau de communication. Une telle passerelle est souvent commercialisée en France sous le nom de « box » et offre de multiples services (téléphonie, Internet, télévision...), tel qu'un équipement LiveBox (produit commercialisé d'Orange).

Le dispositif émetteur est un terminal tel qu'un téléphone mobile de type smartphone, un ordinateur, une tablette, un objet connecté, ou tout autre dispositif communicant.

Le dispositif émetteur peut aussi être un équipement de terminaison de réseau selon l'invention.

Dans un mode de réalisation, l'étape de vérification comporte une interrogation d'une base de données pour obtenir, à partir de l'adresse IP source du paquet IP, une information de configuration relative à une souscription du dispositif émetteur à un service d'anonymisation de l'adresse IP source.

A titre d'exemple, la base de données interrogée peut être de type SPR (pour « Subscriber Profile Repository » en anglais) connectée à une entité de type PCRF (pour « Policy and Charging Rules Function » en anglais), cette entité de type PCRF étant elle-même connectée à une entité de type PCEF (pour « Policy and Charging Enforcement Function » en anglais) d'un équipement de type PGW (pour « Packet data network GateWay» en anglais) d'un réseau mobile. La demande d'anonymisation de l'adresse IP source peut être téléchargée dans l'entité PCEF lors de la création du nom de point d'accès APN (pour « Access Point Name » en anglais) utilisé par l'application du dispositif émetteur ayant généré le paquet IP, telle que le nom de point d'accès APN Internet.

La base de données interrogée peut être une instance de la base de type SPR, cette instance étant une copie dans une base de données interne à un équipement de type PGW.

Ce mode permet d'activer la mise en oeuvre du procédé de traitement de demande conforme à l'invention de manière permanente pour le trafic IP émis par le dispositif émetteur. L'enregistrement de la demande d'anonymisation du trafic IP pour un utilisateur peut avoir été effectué par un opérateur du réseau de communication, ou sur souscription du dispositif émetteur ou de l'équipement de terminaison de réseau à un service de type IUIR (pour « Internet User Identifier Restriction » en anglais).

Ce mode permet de garantir que ni l'adresse IP du dispositif émetteur ni celle de l'équipement de terminaison de réseau ne sera divulguée à l'application ou à l'utilisateur du dispositif de destination. Cette adresse IP ne sera jamais divulguée même au dispositif de destination si le dispositif d'anonymisation n'est pas incorporé dans le dispositif de destination.

Dans un autre mode de réalisation, l'étape de vérification comporte une détection d'une information de marquage dans un champ du paquet IP, l'information de marquage étant représentative de la demande d'anonymisation.

Ce mode permet à un utilisateur du dispositif émetteur d'avoir un contrôle sur la mise en oeuvre du procédé de traitement de demande conforme à l'invention. L'utilisateur peut sélectionner pour quels paquets IP il souhaite que le procédé de traitement conforme à l'invention soit mis en oeuvre.

Il est à noter que la recherche et l'obtention de l'information de marquage par le dispositif d'anonymisation conforme à l'invention ne pénalise pas la latence d'acheminement du paquet IP car de toute façon, les entêtes IP sont manipulées, par exemple pour rechercher une adresse IP source ou de destination, ou un numéro de port source ou de destination, ou pour un contrôle de cohérence de checksum du paquet IP, etc.

Il est à noter également que l'impact de l'invention sur les critères MTU (pour « Maximum Transmission Unit ») n'est pas pénalisant. Nous rappelons que les critères MTU sont relatifs à la taille maximale d'un paquet IP pouvant être transmis en une seule fois sur un segment de réseau. En effet, l'information de marquage peut ne consommer qu'un seul bit pour représenter une demande d'anonymisation.

Dans un mode de réalisation, au cours de l'étape de vérification, il est déterminé que l'adresse IP source du paquet IP doit être anonymisée s'il a été déterminé auparavant que l'adresse IP source d'un paquet IP précédent de la même session devait être anonymisée.

Nous rappelons qu'une session IP est basée sur une adresse IP source, un port d'émission, une adresse IP destination, un port de destination et un protocole de transport.

Dans ce mode, une fois que la session IP est établie, lorsque le dispositif d'anonymisation conforme à l'invention vérifie que l'adresse IP source d'un paquet IP reçu de la session doit être anonymisée, il détermine que tous les paquets IP de la même session sont aussi concernés par la demande d'anonymisation.

Le dispositif d'anonymisation conforme à l'invention peut appliquer un traitement spécifique à ces paquets IP de la même session, en particulier une anonymisation ou un routage identique au premier paquet IP reçu de cette session.

Ce mode permet de gagner du temps de traitement au niveau du dispositif d'anonymisation. En effet, le dispositif d'anonymisation n'a pas besoin d'interroger la base de données ou de chercher l'information de marquage si le paquet IP reçu est de la même session que le paquet IP précédent pour lequel il a été déterminé que son adresse IP source devait être anonymisée.

En particulier, lorsque la vérification pour le premier paquet IP reçu de la session IP est basée sur la détection de l'information de marquage, le dispositif ayant inséré cette information de marquage peut se contenter de marquer un seul ou certains paquets IP de cette session IP, et non pas la totalité des paquets IP de la même session.

Dans un mode de réalisation, au cours de l'étape de vérification, il est déterminé que l'adresse IP source du paquet IP doit être anonymisée s'il a été déterminé auparavant que l'adresse IP source d'un paquet IP précédent émis par ledit dispositif émetteur vers ledit dispositif destinataire devait être anonymisée.

Ce mode permet de gagner du temps de traitement au niveau du dispositif d'anonymisation en évitant d'interroger la base de données ou de chercher l'information de marquage si le nouveau paquet IP reçu a les mêmes adresses IP source et destination que le paquet précédent pour lequel il a été déterminé que son adresse IP source devait être anonymisée. Nous notons que le dispositif d'anonymisation doit de toute façon obtenir l'adresse IP de destination, et éventuellement l'adresse IP source, pour le routage du paquet.

Ce mode permet d'anonymiser tout le trafic IP émis par le dispositif émetteur vers le dispositif destinataire, sans contrôle de paramètres de session IP.

Ce mode est aussi plus avantageux que les solutions de l'art antérieur basées sur l'utilisation d'un serveur proxy ou un serveur VPN. En effet, l'invention n'exige pas une configuration de l'adresse IP et du numéro de port du dispositif d'anonymisation au niveau du dispositif émetteur ou de l'équipement de terminaison de réseau.

Dans un mode de réalisation, le procédé de traitement de demande d'anonymisation conforme à l'invention comporte en outre une étape d'incrémentation d'un compteur de paquets IP comportant l'information de marquage.

L'invention permet d'effectuer des statistiques sur le nombre ou le pourcentage des paquets IP dont les adresses IP source doivent être anonymisées. Ces statistiques peuvent être exploitées pour dimensionner le réseau, par exemple en matière de nombre et de positionnements de dispositifs d'anonymisation conformes à l'invention, pour anticiper des évolutions d'un réseau, pour proposer des nouvelles fonctionnalités de connexion à un réseau, pour adapter la qualité de service offerte par un réseau, et/ou pour établir des politiques de facturation.

Dans un mode de réalisation, le procédé de traitement de demande d'anonymisation conforme à l'invention comporte en outre une étape de suppression de l'information de marquage avant un transfert de ce paquet IP vers un autre dispositif.

Ce mode est adapté pour un traitement local des paquets IP, au niveau du dispositif d'anonymisation conforme à l'invention, sans divulguer les informations de marquage aux autres dispositifs par lesquels le paquet IP passe jusqu'à arriver à son dispositif destinataire. De cette façon, le dispositif de destination ne saura pas que l'adresse IP source a été anonymisée.

Néanmoins l'information de marquage peut être transmise jusqu'au dispositif de destination pour des raisons de sécurité, notamment lorsque le dispositif de destination est un serveur de service. Le dispositif de destination peut ainsi connaître que l'adresse IP source d'un paquet IP reçu avec une information de marquage a été anonymisée et décide alors de répondre ou pas à ce paquet IP.

Dans un mode de réalisation, le procédé de traitement de demande d'anonymisation conforme à l'invention comporte en outre une étape de modification de l'information de marquage avant un transfert de ce paquet IP vers un autre dispositif.

Ce mode peut être mis en oeuvre pour assurer une compatibilité lors d'un passage du paquet IP d'un réseau à un autre, ces deux réseaux n'utilisant pas un même format des informations de marquage.

Dans un mode de réalisation, l'étape de routage du paquet IP par le dispositif d'anonymisation conforme à l'invention comporte une sélection d'une qualité de service à appliquer au paquet IP, en fonction du résultat de l'étape de vérification, c'est-à-dire en fonction de la présence ou pas de la demande d'anonymisation.

Par exemple, le dispositif d'anonymisation conforme à l'invention peut traiter les paquets IP dont les adresses IP sont anonymisées ou à anonymiser de façon moins privilégiée par rapport aux autres paquets IP, en les plaçant dans des files d'attentes moins prioritaires ou plus longues, ou en les transportant sur un canal de communication avec des performances moins bonnes (en termes de latence ou de rapport signal à bruit par exemple), ou en les routant vers des routes moins rapides, etc.

Dans un mode de réalisation, le procédé de traitement de demande d'anonymisation conforme à l'invention comporte en outre une étape de marquage du paquet IP, le marquage étant de type IP DSCP (pour « Differentiated Service Code Point » en anglais). Ce mode permet de notifier des noeuds placés en aval du dispositif d'anonymisation, d'un niveau de priorité associé au paquet IP et/ou d'un autre traitement devant être appliqué au paquet IP.

Dans un mode de réalisation, le procédé de traitement de demande d'anonymisation conforme à l'invention comporte en outre une étape d'application d'une méthode de facturation en fonction du résultat de l'étape de vérification, c'est-à-dire en fonction de la présence ou pas de la demande d'anonymisation.

Dans un mode de réalisation, le procédé de traitement de demande d'anonymisation conforme à l'invention comporte en outre une étape d'envoi d'un paquet ICMP (pour « Internet Control and Error Message Protocol » en anglais) au dispositif émetteur pour l'informer d'une raison de refus d'acheminement de son paquet IP vers le dispositif de destination.

Ce mode peut être mis en oeuvre lorsque le dispositif de destination bloque les paquets IP reçus du dispositif d'anonymisation, ou les paquets pour lesquels le dispositif de destination soupçonne ou détecte via l'information de marquage que leurs adresses IP sources ont été anonymisées.

Dans un mode de réalisation, le procédé de traitement de demande d'anonymisation conforme à l'invention comporte en outre une étape de création d'un tunnel IP pour l'étape de routage du paquet IP.

Ce mode permet d'aiguiller le paquet IP vers une destination spécifique, à savoir l'autre bout du tunnel IP, et d'appliquer au paquet une méthode déterminée de qualité de service correspondante à ce tunnel IP, ou bien par exemple d'appliquer un traitement particulier comme par exemple un cryptage du trafic IP passant par ce tunnel.

Ce mode peut être mis en oeuvre de façon privilégiée lorsque le dispositif d'anonymisation ne dispose pas de fonction de traduction d'adresses. Dans ce mode de réalisation, le paquet IP est routé via le tunnel IP vers l'équipement du réseau qui dispose d'une fonction de traduction d'adresses.

Dans un mode de réalisation, le procédé de traitement de demande d'anonymisation conforme à l'invention comporte en outre une étape de dés-encapsulation d'un tunnel IP pour ne pas router le paquet IP via ce tunnel IP.

Ce mode permet d'appliquer au paquet IP une méthode de routage et une méthode d'application d'une qualité de service, autres que les méthodes mises en oeuvre pour le tunnel IP.

Dans un mode de réalisation, le procédé de traitement de demande d'anonymisation conforme à l'invention comporte en outre une étape de mémorisation de paramètres de la session durant laquelle le paquet IP est reçu, pour appliquer un traitement à d'autres paquets IP de la même session.

En particulier, la mémorisation de paramètres de session permet d'identifier au moins un paquet IP de réponse au paquet IP reçu par le dispositif d'anonymisation conforme à l'invention. Ce mode permet d'appliquer un traitement spécifique aux paquets IP de réponse à des paquets IP reçus du dispositif émetteur, tel qu'une application d'une méthode particulière de routage.

Aussi, la mémorisation de paramètres de session permet d'identifier d'autres paquets IP reçus en provenance du dispositif émetteur, de la même session que le paquet IP pour lequel il a été déterminé que l'adresse IP source doit être anonymisée. Ainsi, une fois que la session IP est établie, lorsque le dispositif d'anonymisation conforme à l'invention détecte une demande d'anonymisation pour un premier paquet IP de la session, il peut déduire que les paquets IP de la même session sont aussi concernés par la demande d'anonymisation.

Dans un mode de réalisation, le procédé de traitement de demande d'anonymisation conforme à l'invention comporte en outre une étape de mémorisation d'un paramètre d'une entête de couche applicative encapsulée dans le paquet IP reçu, pour appliquer un traitement à d'autres paquets comportant le même paramètre.

En particulier, le paramètre peut être relatif à un identifiant du dispositif émetteur, à un identifiant d'un constructeur du dispositif émetteur, à un identifiant d'un opérateur auquel le dispositif émetteur est souscrit, à un identifiant du dispositif destinataire ou de son opérateur, à un identifiant d'un navigateur web (paramètre "User Agent" par exemple), à un identifiant d'un site web (paramètre "Referer" par exemple), ou à un identifiant relatif à des activités sur les sites web précédemment consultés (paramètre « cookies » par exemple).

Dans un mode de réalisation, la demande d'anonymisation d'une adresse IP source d'un paquet IP comporte en outre une demande d'anonymisation d'un numéro de port source de ce paquet IP, l'anonymisation du numéro de port source comportant une modification du numéro.

L'anonymisation du numéro de port source permet d'améliorer la sécurité du trafic IP émis par le terminal.

Le numéro de port source peut être remplacé par un numéro de port du dispositif d'anonymisation, ou par un autre numéro, ou par une valeur déterminée qui signifie que le numéro de port source est masqué.

Dans un mode de réalisation la demande d'anonymisation d'une adresse IP source d'un paquet IP comporte en outre une demande d'anonymisation d'un paramètre d'une entête de couche applicative encapsulée dans le paquet IP, l'anonymisation de ce paramètre comportant sa modification ou sa suppression.

Dans ce mode de réalisation, le procédé de traitement d'une demande d'anonymisation comporte en outre :
- si le dispositif d'anonymisation dispose d'une fonction de traitement d'entêtes de couches applicatives, telle qu'une fonction de type DPI (pour « Deep Packet Inspection » en anglais), une étape d'anonymisation du paramètre de l'entête de couche applicative ; et
- sinon, une étape de routage du paquet IP vers le dispositif destinataire via un équipement du réseau disposant d'une fonction de traitement d'entêtes de couches applicatives.

Le paramètre de l'entête applicative peut être relative au navigateur web (paramètre « User Agent ») ou au site web (paramètre « Referer ») depuis lequel une nouvelle requête web est activée et ayant généré le paquet IP, ou à des informations concernant des sites web précédemment consultés (paramètres « cookies »). Le dispositif de destination ne pourra donc pas connaître ces informations.

Dans un mode de réalisation, le dispositif d'anonymisation conforme à l'invention comporte un module de traitement d'entêtes de couches applicatives configuré pour anonymiser le paramètre d'une entête de couche applicative encapsulée dans le paquet, ce module met en oeuvre une fonction de type DPI par exemple.

Dans un mode de réalisation, la demande d'anonymisation d'une adresse IP source d'un paquet IP comporte une demande d'anonymisation pour :
- tout trafic IP émis par le dispositif émetteur ;
- tout trafic IP émis par le dispositif émetteur durant une même session que ledit paquet IP ;
- un trafic généré par une application du dispositif émetteur ;
- tout trafic émis par l'ensemble de dispositifs connectés au réseau via l'équipement de terminaison de réseau.

L'invention offre ainsi plusieurs options d'anonymisation. Contrairement aux solutions de l'art antérieur, l'invention permet de sélectionner le trafic IP pour lequel les adresses IP sources de ses paquets IP doivent être anonymisées.

Le dispositif d'anonymisation conforme à l'invention peut être compris dans :
- un serveur de type BAS (pour « Broadband Access Server » en anglais), Node Edge, MSAP (pour « Multi Service Access Platform» en anglais) ou PFA (pour « Plate-Forme d'Accès») ;
- un routeur ;
- un équipement de type PGW (pour « Packet data network GateWay» en anglais);
- un serveur proxy ;
- un équipement de terminaison de réseau de type passerelle de destination;
- un serveur de destination; ou
- un terminal de destination.

Plusieurs dispositifs réseau actuellement disponibles sur le marché peuvent être modifiés pour mettre en oeuvre le procédé de traitement de demande d'anonymisation selon l'invention.

Le dispositif d'anonymisation conforme à l'invention a au moins une fonction de routage IP de la couche 3 du modèle OSI.

L'invention vise également un système d'anonymisation, configuré pour traiter une demande d'anonymisation d'une adresse IP source d'un paquet IP émis par un dispositif émetteur vers un dispositif destinataire via un réseau de communication, le dispositif émetteur étant connecté au réseau via un équipement de terminaison de réseau, le système d'anonymisation étant placé en coupure de flux entre l'équipement de terminaison de réseau et le dispositif destinataire, et comprenant :
- un dispositif d'anonymisation conforme à l'invention, ne disposant pas de fonction de traduction d'adresses ; et
- un équipement du réseau disposant d'une fonction de traduction d'adresses.

Ainsi, lorsque le dispositif d'anonymisation conforme à l'invention ne peut anonymiser l'adresse IP d'un paquet IP, il route ce paquet IP à l'équipement du réseau pour effectuer l'anonymisation. L'équipement du réseau peut être un serveur proxy ou tout autre équipement disposant d'une fonction de traduction d'adresses.

Le système d'anonymisation conforme à l'invention est plus avantageux qu'un serveur proxy de l'état de la technique. En effet, le système d'anonymisation conforme à l'invention peut être utilisé pour traiter un trafic IP généré par une application mobile intégrant partiellement ou globalement le mode WebView et plus généralement depuis n'importe quelle application et pour n'importe quel protocole applicatif encapsulé dans les paquets IP. De plus, l'invention n'exige pas de configuration des paramètres d'un serveur proxy au niveau du dispositif émetteur et/ou au niveau des applications installées sur le dispositif émetteur.

Dans un mode de réalisation, le système d'anonymisation conforme à l'invention comporte :
- un dispositif d'anonymisation conforme à l'invention, ne disposant ni de fonction de traduction d'adresses, ni de fonction de traitement d'entêtes de couches applicatives ;
- un équipement du réseau disposant d'une fonction de traduction d'adresses ; et
- un équipement du réseau disposant d'une fonction de traitement d'entêtes de couches applicatives, telle qu'une fonction DPI.

L'invention vise également un procédé de demande d'anonymisation d'une adresse IP source d'un paquet IP émis par un dispositif émetteur vers un dispositif destinataire via un réseau de communication selon la revendication 5.

Corrélativement, l'invention vise un équipement de terminaison de réseau configuré pour demander une anonymisation d'une adresse IP source d'un paquet IP envoyé par un dispositif émetteur vers un dispositif destinataire via un réseau de communication selon la revendication 17.

Les caractéristiques et avantages du procédé de demande d'anonymisation selon l'invention présentés ci-après s'appliquent de la même façon à l'équipement de terminaison de réseau selon l'invention et vice versa.

Les caractéristiques et avantages du procédé de demande d'anonymisation selon l'invention présentés ici s'appliquent de la même façon au procédé de traitement d'une demande d'anonymisation selon l'invention et vice versa.

L'équipement de terminaison de réseau conforme à l'invention peut mettre en oeuvre le procédé de demande d'anonymisation conforme à l'invention.

Dans un mode de réalisation, l'information de marquage est différente de l'adresse IP source ou d'une adresse IP de destination du paquet.

Dans un mode de réalisation, l'information de marquage ne représente que la demande d'anonymisation et n'a pas d'autres significations.

Dans un mode de réalisation, l'étape de détection d'une configuration comporte une détection d'une utilisation d'un protocole spécifique sur le dispositif émetteur pour émettre le paquet IP.

Par exemple, le protocole spécifique pour la présente invention peut être nommé « httpa ». Ce protocole est une instance du protocole http de l'état de la technique, et il permet en plus de spécifier qu'une requête comportant le préfixe du protocole httpa est une requête pour laquelle il est demandé d'anonymiser l'adresse IP source des paquets IP correspondant à cette requête. La lettre « a » du protocole « httpa » désigne l'anonymisation. Le protocole httpa est un protocole de couche applicative.

Le même mécanisme peut s'appliquer pour l'ensemble des protocoles applicatifs tels que FTP (pour « File Transfer Protocol » en anglais), DNS (pour « Domain Name System» en anglais), NTP (pour « Network Time Protocol» en anglais), SIP (pour « Session Initiation Protocol» en anglais), RTP (pour « Real-time Transport Protocol» en anglais), RTCP (pour « Real-time Transport Control Protocol» en anglais), SMTP (pour « Simple Mail Transfer Protocol» en anglais), etc. L'ajout d'un suffixe « a » à des instances de ces protocoles représente des demandes d'anonymisation.

Dans ce mode relatif à l'utilisation d'un protocole spécifique, la pile protocolaire de couche inférieure dans le modèle OSI détecte l'utilisation du protocole spécifique (httpa par exemple) et interprète cette utilisation comme une demande d'anonymisation. La pile protocolaire de couche inférieure peut être, à titre d'exemples, la pile protocolaire TCP/IP (pour « Transmission Control Protocol / Internet Protocol ») ou la pile protocolaire UDP/IP (pour « User Datagram Protocol / IP ») ou la pile protocolaire SCTP/IP (pour « Stream Control Transmission Protocol /IP ») ou une couche logicielle intermédiaire entre une application ou un navigateur installé sur le dispositif émetteur et la pile protocolaire TCP/IP ou UDP/IP ou SCTP/IP. En particulier, l'utilisation du protocole spécifique peut être détectée par l'interface de programmation API d'accès (APl pour « Application Programming Interface » en anglais) de la pile protocolaire TCP/IP ou UDP/IP ou SCTP/IP.

Le protocole spécifique peut être utilisé sur un navigateur web ou sur une application installée sur le dispositif émetteur, par exemple une application mobile utilisant partiellement ou globalement le mode WebView.

Ce mode permet à un utilisateur du dispositif émetteur de configurer et de contrôler la mise en oeuvre du procédé de demande d'anonymisation conforme à l'invention, requête par requête.

Dans un mode de réalisation, l'étape de détection d'une configuration comporte une détection d'une information de configuration dans un menu de configuration de l'équipement de terminaison de réseau.

Ce mode permet d'utiliser le menu de configuration déjà installé sur l'équipement de terminaison de réseau pour mettre en oeuvre le procédé de demande d'anonymisation conforme à l'invention.

Ce mode permet de configurer l'équipement de terminaison de réseau pour demander l'anonymisation de façon permanente, et non pas requête par requête.

En particulier, lorsque l'équipement de terminaison de réseau est le dispositif émetteur, l'information de configuration peut être spécifiée par l'utilisateur du dispositif émetteur.

Lorsque l'équipement de terminaison de réseau est une passerelle, tel qu'un équipement de type Livebox par exemple, l'information de configuration peut être spécifiée par un utilisateur de cette passerelle via une interface de configuration de la passerelle, ou par un utilisateur du dispositif émetteur via une application installée sur le dispositif émetteur et qui permet d'accéder au menu de configuration de la passerelle.

Un module logiciel est ajouté au menu de configuration de l'équipement de terminaison pour donner à un utilisateur de cet équipement la possibilité de sélectionner un mode de mise en oeuvre du procédé de demande d'anonymisation conforme à l'invention : par exemple demander d'anonymiser l'adresse IP pour tous les paquets générés par le dispositif émetteur, ou pour tous les paquets devant être émis par l'équipement de terminaison de réseau, ou pour des paquets générés par une application déterminée uniquement.

Alternativement, l'information de configuration peut être spécifiée par l'opérateur gérant le réseau, en fonction d'une adhésion à un service de type IUIR, par exemple via un équipement de gestion de dispositifs du réseau, qui fournit la configuration à l'équipement de terminaison de réseau.

Dans un mode de réalisation, l'étape de détection d'une configuration comporte une détection d'une information de configuration dans une application installée sur le dispositif émetteur.

Ce mode permet de configurer le dispositif émetteur pour demander l'anonymisation de façon permanente. Ce mode permet également à un utilisateur du dispositif émetteur de sélectionner un mode de mise en oeuvre du procédé de demande d'anonymisation conforme à l'invention. Dans ce mode, le dispositif émetteur constitue un équipement de terminaison de réseau conforme à l'invention.

Le fait de séparer l'application spécifique à la présente invention du menu de configuration du dispositif émetteur permet d'améliorer la sécurité logicielle et permet de s'adapter aux dispositifs existants qui ne disposent pas de paramétrage de configuration d'anonymisation du trafic IP. Conformément à ce mode, l'application peut être téléchargeable d'un réseau Internet. L'application peut être générique et ne dépend pas d'un menu de configuration particulier d'un dispositif émetteur.

Nous notons que lorsque le dispositif émetteur est configuré avec des paramètres d'un serveur proxy, la pile protocolaire TCP/IP ou UDP/IP ou SCTP/IP de l'équipement de terminaison de réseau ou l'API d'accès de cette pile protocolaire ou une couche logicielle intermédiaire entre l'application ayant généré le paquet IP et la pile TCP/IP ou UDP/IP ou SCTP/IP de l'équipement de terminaison de réseau peut détecter cette configuration en détectant une différence entre l'adresse IP de destination du paquet IP (qui est l'adresse IP du serveur proxy) et l'adresse Host contenue dans les entêtes de couche applicative (qui est l'adresse IP du dispositif de destination). Dans ce cas, l'équipement de terminaison de réseau peut remplacer l'adresse IP de destination du paquet IP par l'adresse du dispositif de destination et mettre en oeuvre le procédé de demande d'anonymisation conforme à l'invention.

Dans le cas où le paquet IP est de type IPv4, l'équipement de terminaison de réseau peut insérer l'information de marquage dans le champ « Type de service » ou le champ « Drapeaux » ou le champ « Options IP » de l'entête IPv4 du paquet IP.

Nous rappelons que le champ « Type de service » comporte huit bits dont deux bits ECN (pour « Explicit Congestion Notification » en anglais). Ces deux bits ont été définis en 2001 par la standardisation mais à l'état actuel de la technique, ces bits ne sont pas utilisés. Ils peuvent être utilisés conformément à la présente invention pour y insérer l'information de marquage. La taille du paquet IP n'est pas augmentée.

Nous rappelons que le champ « Drapeaux » est codé sur trois bits et n'utilise dans l'état de la technique que le deuxième bit (appelé « don't fragment ») et le troisième bit (appelé « more fragments »). De ce fait, le premier bit de ce champ « Drapeaux » peut être utilisé par la présente invention. A titre d'exemple, ce premier bit peut être fixé à 1 pour les paquets IP comportant une demande d'anonymisation et fixé à 0 pour les autres paquets. La taille du paquet IP n'est pas augmentée.

Nous rappelons qu'une option IPV4 est codée sur 8 bits. Il est envisageable de créer une nouvelle option IP, de l'une des classes 0 à 3, pour y insérer l'information de marquage. L'utilisation du champ « Options IP » consomme plus de mémoire que l'utilisation du champ « Type de service » ou « Drapeaux ». En effet, l'utilisation du champ « Options IP » augmente la taille du paquet IP au maximum de 4 octets, même si une option IP est codée sur un seul octet de sorte à préserver l'alignement des paquets IP sur un multiple de 32 bits.

L'utilisation du champ « Type de service » ou du champ « Drapeaux » est donc préférable en terme de taille du paquet IP et de recherche d'une information de marquage dans le paquet.

Dans le cas où le paquet est de type IPv6, le dispositif émetteur peut insérer l'information de marquage dans le champ « Classe de trafic », en particulier les bits ECN de ce champ « Classe de trafic », ou le champ « étiquette de flow » ou le champ « entête d'extension» de l'entête IPv6 du paquet IP.

Une valeur d'étiquette de flow déterminée peut indiquer une demande d'anonymisation, par exemple en choisissant une valeur hexadécimale de type « 0xBCDEF ».

Alternativement, l'information de marquage peut être insérée dans une nouvelle valeur d'option « anonymisation » codée en TLV (pour « Type Length Value » en anglais) et encapsulée dans l'extension existante « Hop by Hop Options ».

Alternativement, une nouvelle extension IPv6 peut être créée spécifiquement pour y insérer l'information de marquage, cette nouvelle extension peut être nommée « Anonymous trafic » et comportant par exemple une valeur 61.

Ainsi, l'invention est compatible avec les protocoles IPv4 et IPv6, et peut donc être facilement mise en oeuvre par des dispositifs émetteurs et des équipements réseau (équipements d'anonymisation au sens de l'invention) actuellement disponibles sur le marché avec des modifications mineures pour insérer et rechercher les informations de marquage.

L'invention peut être utilisée pour marquer des trafics de différentes applications, comme les applications de navigation web, les applications de mail, les applications de transfert de fichiers FTP (pour «File Transport Protocol »), les applications de TV, les applications de vidéo VoD (pour « Video on Demand »), les applications de voix sur IP VoIP (pour « Voice over IP »), des trafics de signalisation générés par des véhicules connectés et/ou autonomes etc. En effet, les informations de marquage sont insérées au niveau des entêtes IP et n'impactent pas les données de ces applications intégrées dans les corps des paquets IP.

Dans un mode de réalisation, l'information de marquage est insérée dans le champ « numéro de port source» au niveau de la couche de transport 4 du modèle OSI (régie par le protocole TCP ou UDP ou SCTP par exemple). Une nouvelle valeur de numéro port source est créée spécifiquement pour l'invention, cette valeur désigne une demande d'anonymisation de l'adresse IP source.

L'invention est compatible avec le protocole d'agrégation de trafic MPTCP (pour « Multi Path Transport Control Protocol » en anglais).

L'invention peut être compatible avec les mécanismes combinatoires de tunnel, permettant de passer d'un protocole parmi les protocoles IPv4, IPv6 et GTP (pour « GPRS Tunneling Protocol » en anglais) à un autre.

L'invention est aussi compatible avec les mécanismes de sécurisation de l'état de la technique, tels que les protocoles IPSec (pour « Internet Protocol Security), sRTP (pour « Secured Real Time Protocol »), SIPS (pour « Session Initiation Protocol Secured »), HTTPS (pour « Hyper Text Transfer Protocol Secured »), et TLS (pour « Transport Layer Security »).

L'invention vise aussi un système de communication permettant d'anonymiser une adresse IP source d'un paquet IP.

Ce système comporte un dispositif d'anonymisation ou un système d'anonymisation conforme à l'invention, et un équipement de terminaison de réseau conforme à l'invention.

L'invention vise également un premier programme d'ordinateur sur un support d'enregistrement, ce programme étant susceptible d'être mis en oeuvre dans un ordinateur ou un équipement d'anonymisation conforme à l'invention. Ce programme comporte des instructions adaptées à la mise en oeuvre d'un procédé de traitement de demande d'anonymisation tel que décrit ci-dessus.

L'invention vise également un deuxième programme d'ordinateur sur un support d'enregistrement, ce programme étant susceptible d'être mis en oeuvre dans un ordinateur ou un équipement de terminaison de réseau conforme à l'invention. Ce programme comporte des instructions adaptées à la mise en oeuvre d'un procédé de demande d'anonymisation tel que décrit ci-dessus.

L'invention vise également un troisième programme d'ordinateur sur un support d'enregistrement, ce programme étant susceptible d'être mis en oeuvre dans un ordinateur ou un dispositif émetteur ou un équipement de terminaison de réseau conforme à l'invention. Ce programme comporte des instructions adaptées pour permettre à un utilisateur de configurer le dispositif émetteur et/ou l'équipement de terminaison de réseau pour sélectionner un mode particulier de mise en oeuvre d'un procédé de demande d'anonymisation tel que décrit ci-dessus. Ce troisième programme d'ordinateur peut être une application installée sur le dispositif émetteur ou un module logiciel compris dans le menu de configuration de ce dispositif émetteur, ou un module logiciel compris dans le menu de configuration de l'équipement de terminaison de réseau.

Chacun de ces programmes peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'information ou un support d'enregistrement lisibles par un ordinateur, et comportant des instructions du premier ou du deuxième ou du troisième programme d'ordinateur tel que mentionné ci-dessus.

Les supports d'information ou d'enregistrement peuvent être n'importe quelle entité ou dispositif capable de stocker les programmes. Par exemple, les supports peuvent comporter un moyen de stockage, tel qu'une ROM, par exemple un CD ROM ou une ROM de circuit microélectronique, ou encore un moyen d'enregistrement magnétique, par exemple une disquette (floppy dise) ou un disque dur, ou une mémoire flash.

D'autre part, les supports d'information ou d'enregistrement peuvent être des supports transmissibles tels qu'un signal électrique ou optique, qui peut être acheminé via un câble électrique ou optique, par lien radio, par lien optique sans fil ou par d'autres moyens.

Les programmes selon l'invention peuvent être en particulier téléchargés sur un réseau de type Internet.

Alternativement, chaque support d'informations ou d'enregistrement peut être un circuit intégré dans lequel un programme est incorporé, le circuit étant adapté pour exécuter ou pour être utilisé dans l'exécution d'un procédé conforme à l'invention.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
[Fig. 1] la figure 1 illustre une architecture d'un réseau dans lequel des procédés de l'invention peuvent être mis en oeuvre selon un premier mode de réalisation de l'invention ;
[Fig. 2] la figure 2 est un organigramme représentant des étapes d'un procédé de demande d'anonymisation et des étapes d'un procédé de traitement d'une demande d'anonymisation, les procédés étant conformes à l'invention et mis en oeuvre selon le premier mode de réalisation ;
[Fig. 3] la figure 3 illustre une architecture d'un réseau dans lequel des procédés de l'invention peuvent être mis en oeuvre selon un deuxième mode de réalisation de l'invention ;
[Fig. 4] la figure 4 est un organigramme représentant des étapes d'un procédé de demande d'anonymisation et des étapes d'un procédé de traitement d'une demande d'anonymisation, les procédés étant conformes à l'invention et mis en oeuvre selon le deuxième mode de réalisation ;
[Fig. 5] la figure 5 illustre une architecture d'un réseau dans lequel des procédés de l'invention peuvent être mis en oeuvre selon un troisième mode de réalisation de l'invention ;
[Fig. 6] la figure 6 illustre une architecture d'un réseau dans lequel un procédé de traitement d'une demande d'anonymisation conforme à l'invention peut être mis en oeuvre selon un quatrième mode de réalisation de l'invention ;
[Fig. 7A-7B] les figures 7A et 7B représentent des architectures fonctionnelles, selon deux modes de réalisation de l'invention, d'un équipement de terminaison de réseau conforme à l'invention décrit en référence aux figures 1 à 4 ;
[Fig. 8A-8B] les figures 8A et 8B illustrent des architectures fonctionnelles de dispositifs d'anonymisation conformes à l'invention, décrits en référence aux figures 1 à 4 ;
[Fig. 9] la figure 9 présente une architecture matérielle d'un équipement de terminaison de réseau selon un mode de réalisation de l'invention ; et
[Fig. 10] la figure 10 présente une architecture matérielle d'un dispositif d'anonymisation selon un mode de réalisation de l'invention.

### Description de modes de réalisation

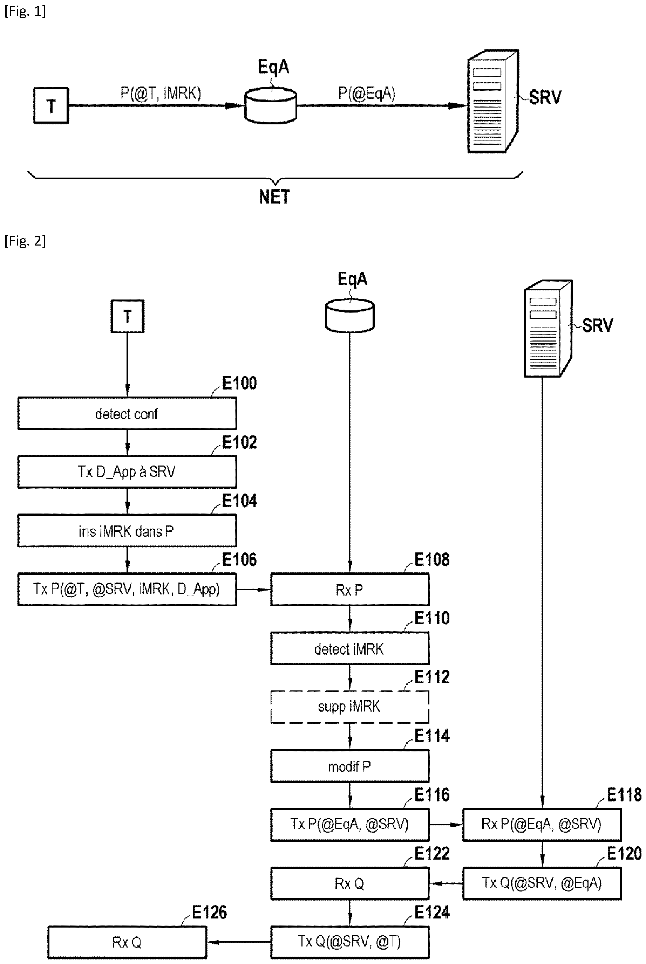

La **figure 1** illustre une architecture d'un réseau NET dans lequel les procédés conformes à l'invention, de demande d'anonymisation d'une adresse IP source, et de traitement de la demande peuvent être mis en oeuvre selon un premier mode de réalisation de l'invention.

Le réseau NET permet de connecter un terminal T à un serveur SRV. Le réseau NET peut comporter plusieurs sous-réseaux, gérés par un ou plusieurs opérateurs.

Le terminal T constitue un dispositif émetteur au sens de l'invention, et aussi un équipement de terminaison de réseau conforme à l'invention. Le serveur SRV constitue un dispositif destinataire au sens de l'invention.

Un équipement de réseau EqA conforme à l'invention est placé dans le réseau NET, en coupure de flux entre le terminal T et le serveur SRV. Le trafic IP échangé entre le terminal T et le serveur SRV passe par cet équipement EqA. L'équipement EqA constitue un dispositif d'anonymisation conforme à l'invention.

Dans le mode décrit ici, le dispositif d'anonymisation EqA est un routeur qui dispose d'une fonction de traduction d'adresse NAPT.

Il n'existe pas de contraintes sur l'emplacement du dispositif EqA dans le réseau NET, mis à part qu'il est placé en coupure de flux entre le terminal T et le serveur SRV. Le dispositif EqA peut appartenir à un même sous réseau que le terminal T, ou à un même sous-réseau que le serveur SRV.

La **figure 2** est un organigramme représentant des étapes d'un procédé de demande d'anonymisation d'une adresse IP source, conforme à l'invention, mis en oeuvre par le terminal T décrit en référence à la figure 1. L'organigramme de la figure 2 représente aussi des étapes d'un procédé de traitement d'une demande d'anonymisation d'une adresse IP source, conforme à l'invention, mis en oeuvre par le dispositif d'anonymisation EqA décrit en référence à la figure 1.

Les étapes E100, E102, E104 et E106 décrites ci-après sont des étapes du procédé de demande d'anonymisation conforme à l'invention.

Les étapes E108, E110, E112, E114 et E116 décrites ci-après sont des étapes du procédé de traitement d'une demande d'anonymisation conforme à l'invention.

Au cours d'une étape E100, le terminal T détecte une configuration qui représente une demande par l'utilisateur du terminal T pour anonymiser l'adresse IP source des paquets générés par son terminal T.

Dans le mode décrit ici, cette configuration est initiée par l'utilisateur du terminal T sur une application APP installée sur le terminal T, l'application APP étant dédiée pour permettre à l'utilisateur de choisir de mettre en oeuvre ou pas le procédé de demande conforme à l'invention.

Alternativement, la configuration peut être initiée par l'utilisateur du terminal T sur un module logiciel du menu de configuration du terminal T, ce module logiciel permettant à l'utilisateur de choisir de mettre en oeuvre ou pas le procédé de demande conforme à l'invention.

Dans le mode décrit ici, l'application APP permet à l'utilisateur de sélectionner un choix parmi : demander l'anonymisation pour tout le trafic IP (tous les paquets IP) généré par le terminal T, ou demander l'anonymisation de trafic IP généré par une application particulière installée sur le terminal T.

Au cours d'une étape E102, le terminal T détecte, par exemple via son navigateur web ou via une application installée sur ce terminal, suite à une activité de l'utilisateur, une génération de données D_App destinées à être envoyées vers le serveur SRV. Le terminal T génère des paquets IP, y compris un paquet IP, P, pour transporter ces données D_App vers le serveur SRV via le réseau NET.

Au cours d'une étape E104, et suite à la détection E100 de la configuration, le terminal T insère dans un champ de l'entête IP du paquet IP, P, une information de marquage iMRK. Cette information de marquage iMRK représente une demande par le terminal T pour que l'adresse IP source du paquet IP, P, soit anonymisée dans le réseau NET avant d'arriver au serveur SRV.

La signification de l'information de marquage iMRK peut dépendre de la configuration détectée au cours de l'étape E100. Par exemple, si la configuration de l'application APP signifie que l'utilisateur du terminal T souhaite anonymiser tout le trafic IP généré par le terminal T, l'information de marquage iMRK représente une demande d'anonymisation de tous les paquets IP ayant comme adresse IP source l'adresse IP du terminal T.

Alternativement, l'information de marquage iMRK peut représenter une demande d'anonymisation de l'adresse IP source pour le paquet P uniquement.

Alternativement, l'information de marquage iMRK peut représenter une demande d'anonymisation de l'adresse IP source pour tous les paquets IP d'une même session IP que le paquet P.

L'information de marquage iMRK insérée dans un champ de l'entête du paquet P peut signifier une demande d'anonymisation de l'adresse IP source du paquet P, mais aussi une demande d'anonymisation du numéro de port source du paquet P, et/ou une demande d'anonymisation d'un ou de plusieurs paramètres d'une entête de couche applicative encapsulée dans le paquet P.

Une convention est établie au préalable dans le réseau NET pour une interprétation cohérente de l'information du marquage iMRK, entre le terminal T et le dispositif d'anonymisation EqA conformes à l'invention.

L'information de marquage iMRK peut être insérée dans :
- le champ « Type de service » ou le champ « Drapeaux » ou le champ « Options IP » de l'entête IPv4 du paquet P, si ce paquet P est de type IPv4 ; ou
- le champ de type « Classe de trafic » ou « étiquette de flow » ou « entête d'extension» de l'entête IPv6 du paquet P, si ce paquet P est de type IPv6 ; ou
- le champ « numéro de port source » d'une entête encapsulée dans le paquet P; dans ce cas, l'information de marquage iMRK est un numéro de port source déterminé, spécifique à l'invention, et qui représente la demande du terminal T d'anonymiser au moins son adresse IP.

Au cours d'une étape E106, le terminal T envoie le paquet P via le réseau NET à destination du serveur SRV. Le paquet P comporte dans son entête l'information de marquage iMRK, l'adresse IP du terminal T, @T, comme adresse IP source, et l'adresse IP du serveur SRV, @SRV, comme adresse IP de destination. Dans son champ de données, le paquet P comporte les données D_App détectées au cours de l'étape E102.

Au cours d'une étape E108, le dispositif d'anonymisation EqA placé en coupure de flux entre le terminal T et le serveur SRV reçoit le paquet P.

Au cours d'une étape E110, le dispositif EqA vérifie si le paquet P comporte une information de marquage, et il détecte l'information de marquage iMRK dans l'entête du paquet IP, P. Suite à cette détection, le dispositif d'anonymisation EqA détermine que l'adresse IP source du paquet doit être anonymisée.

Au cours d'une étape optionnelle E112, le dispositif EqA supprime cette information de marquage iMRK pour qu'elle ne soit pas transmise à des dispositifs du réseau NET en aval du dispositif EqA.

Au cours d'une étape E114, le dispositif EqA met en oeuvre sa fonction de traduction d'adresses, de type NAT ou NAPT : il modifie l'adresse IP source du paquet P en remplaçant l'adresse @T du terminal T par son adresse IP, @EqA. Le dispositif EqA enregistre un identifiant du paquet P et l'adresse @T du terminal T dans sa mémoire, pour pouvoir identifier un paquet de réponse au paquet P et router ce paquet IP de réponse au terminal T.

En fonction de l'information de marquage iMRK, le dispositif EqA peut aussi modifier, au cours de l'étape E114, le numéro de port source du paquet P par le sien, ou par un autre numéro de port.

Le dispositif EqA peut aussi, au cours de l'étape E114, en fonction de l'information de marquage iMRK et des capacités du dispositif EqA à mettre en oeuvre une fonction DPI, modifier ou supprimer un paramètre d'une entête de couche applicative encapsulée dans le paquet P.

Au cours d'une étape E116, le dispositif EqA envoie le paquet IP, P modifié, vers le serveur SRV, le paquet P ayant comme adresse IP source l'adresse @EqA du dispositif EqA.

Au cours d'une étape E118, le serveur SRV reçoit le paquet IP, P modifié.

Le serveur SRV répond au paquet reçu P par un paquet IP de réponse Q. Pour le serveur SRV, le paquet P provient du dispositif EqA; alors l'adresse IP de destination du paquet Q est celle du dispositif EqA.

Au cours d'une étape E122, le dispositif EqA reçoit le paquet IP de réponse Q.

Au cours d'une étape E124, le dispositif EqA consulte sa table NAT ou NAPT, remplace l'adresse IP de destination du paquet Q par l'adresse @T du terminal T et transmet le paquet Qau terminal T.

Le terminal T reçoit le paquet IP de réponse Q au cours d'une étape E126.

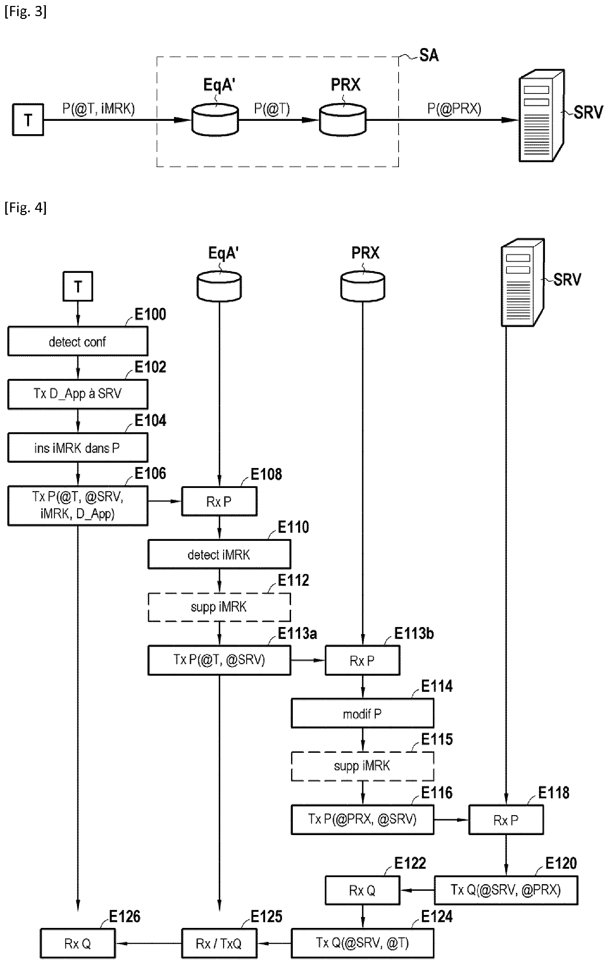

La **figure 3** illustre une architecture d'un réseau NET dans lequel les procédés conformes à l'invention, de demande d'anonymisation d'une adresse IP source, et de traitement de la demande peuvent être mis en oeuvre selon un deuxième mode de réalisation de l'invention.

Dans ce deuxième mode de réalisation, le réseau NET comporte le terminal T et le serveur SRV décrits en référence aux figures 1 et 2, un dispositif d'anonymisation EqA' conforme à l'invention et un serveur proxy PRX.

Le dispositif d'anonymisation EqA' et le serveur proxy PRX forment un système d'anonymisation SA conforme à l'invention.

Dans le mode décrit ici, le dispositif d'anonymisation EqA' ne dispose pas de fonction de traduction d'adresses, ni de fonction DPI permettant de manipuler les entêtes de couches applicatives encapsulées dans le paquet P.

Il n'existe pas de contraintes sur l'emplacement du système d'anonymisation SA dans le réseau NET, mis à part qu'il est placé en coupure de flux entre le terminal T et le serveur SRV. Le système SA peut appartenir à un même sous réseau que le terminal T, ou à un même sous-réseau que le serveur SRV. En particulier, le dispositif EqA' et le serveur PRX peuvent appartenir à deux sous-réseaux différents.

Le serveur proxy PRX dispose d'une fonction de traduction d'adresses et d'une fonction DPI.

La **figure 4** est un organigramme représentant des étapes des procédés conformes à l'invention, mis en oeuvre selon le deuxième mode de réalisation.

Les étapes E100, E102, E104 et E106 décrites ci-après sont des étapes du procédé de demande d'anonymisation conforme à l'invention et sont mises en oeuvre par le terminal T.

Les étapes E108, E110, E112 et E113a décrites ci-après sont des étapes du procédé de traitement d'une demande d'anonymisation conforme à l'invention et sont mises en oeuvre par le dispositif d'anonymisation EqA'.

Le terminal T met en oeuvre des étapes E100 à E106, identiques aux étapes E100 à E106 décrites en référence à la figure 2.

Le dispositif EqA' met en oeuvre des étapes E108 à E112 identiques aux étapes E108 à E112 décrites en référence à la figure 2.

Dans ce mode, le dispositif EqA' ne dispose pas de fonction de traduction d'adresse et ne peut anonymiser l'adresse IP source du paquet P. Au cours d'une étape E113a, le dispositif EqA' transfère le paquet P vers le serveur proxy, PRX. A ce stade, le paquet P a pour adresse IP source, l'adresse @T du terminal T et l'adresse @SRV du serveur SRV pour adresse de destination.

Dans ce mode, le dispositif EqA' ne dispose pas de fonction de traitement des entêtes de couches applicatives, telle qu'une fonction DPI. Le dispositif EqA' ne peut anonymiser des paramètres des entêtes de couches applicatives encapsulées dans le paquet P. C'est aussi pour cette raison que le dispositif EqA' route le paquet P au cours de l'étape E113a au serveur proxy PRX, disposant d'une fonction DPI.

Au cours d'une étape E113b, le serveur proxy PRX reçoit le paquet P.

Le serveur proxy PRX met en oeuvre sa fonction de traduction d'adresse conformément à l'état de la technique : il modifie l'adresse IP source du paquet P par son adresse IP, @PRX. Disposant d'une fonction DPI, le serveur proxy PRX peut également modifier ou supprimer des paramètres des entêtes de couches applicatives encapsulées dans le paquet P.

Au cours d'une étape optionnelle E115, le serveur proxy PRX supprime l'information de marquage iMRK si ce n'est pas déjà fait (E112) par le dispositif EqA'.

Au cours d'une étape E116 similaire à l'étape E116 décrite en référence à la figure 2, le serveur proxy PRX envoie le paquet P vers sa destination, le serveur SRV.

Au cours de deux étapes E118 et E120, similaires aux étapes E118 et E120 décrites en référence à la figure 2, le serveur SRV reçoit le paquet P et y répond par un paquet Q. Le paquet Q comporte dans son entête l'adresse @PRX comme adresse de destination.

Au cours d'une étape E122, le serveur proxy PRX reçoit le paquet Q, consulte sa table de traduction d'adresses, et modifie l'adresse IP de destination du paquet Q par l'adresse @T du terminal T.

Au cours d'une étape E124, le serveur proxy PRX envoie le paquet Q au terminal T via le dispositif EqA'.

Au cours d'une étape E125, le dispositif EqA' reçoit le paquet Qet le route vers le terminal T.

Au cours d'une étape E126 similaire à l'étape E126 décrite en référence à la figure 2, le terminal T reçoit le paquet IP de réponse Q.

Dans un mode de réalisation, le serveur proxy PRX dispose d'une fonction de traduction d'adresses, mais pas de fonction DPI, l'information de marquage iMRK détectée (E110) par le dispositif d'anonymisation EqA' représente une demande pour anonymiser l'adresse IP source du paquet P et d'un paramètre d'une entête de couche applicative. Dans ce mode, le dispositif EqA' transfère (E113a) le paquet P au serveur proxy PRX pour anonymiser l'adresse IP source, tout en précisant au serveur proxy PRX qu'il doit router le paquet P vers un autre équipement du réseau pour anonymiser le paramètre de l'entête applicative, avant d'être acheminé au dispositif de destination SRV, cet autre équipement du réseau disposant d'une fonction DPI.

Dans un mode de réalisation, le serveur proxy PRX dispose d'une fonction DPI, mais pas de fonction de traduction d'adresses, l'information de marquage iMRK détectée (E110) par le dispositif d'anonymisation EqA' représente une demande pour anonymiser l'adresse IP source du paquet P et d'un paramètre d'une entête de couche applicative. Dans ce mode, le dispositif EqA' transfère (E113a) le paquet P au serveur proxy PRX pour anonymiser le paramètre de l'entête applicative, tout en précisant au serveur proxy PRX qu'il doit router le paquet P vers un autre équipement du réseau pour anonymiser l'adresse IP source, avant d'être acheminé au dispositif de destination SRV, cet autre équipement du réseau disposant d'une fonction de traduction d'adresses.

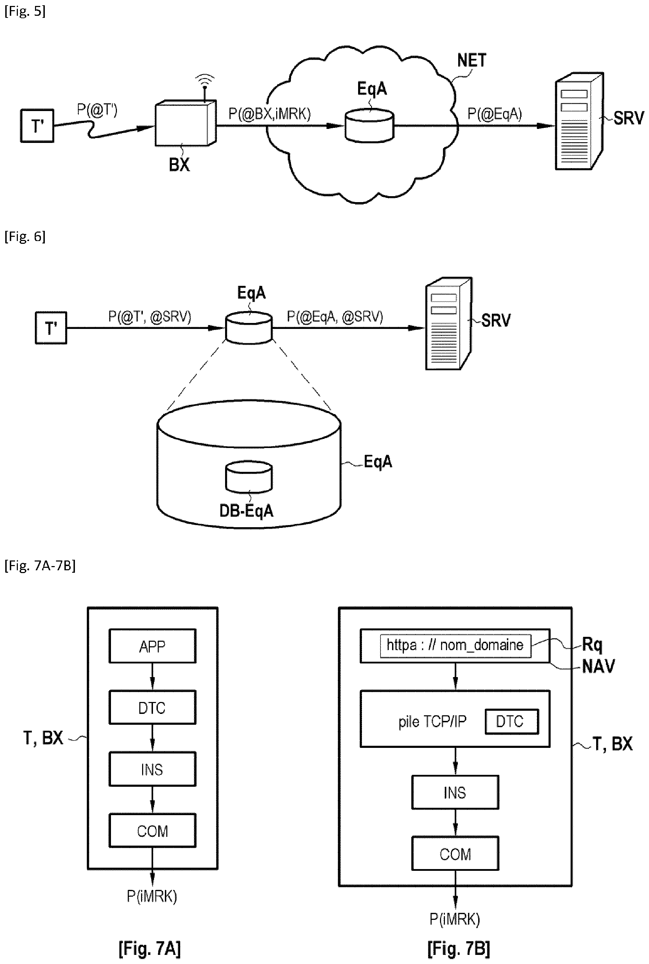

La **figure 5** illustre une architecture d'un réseau NET dans lequel les procédés conformes à l'invention, de demande d'anonymisation d'une adresse IP source, et de traitement de la demande peuvent être mis en oeuvre selon un troisième mode de réalisation de l'invention.

Dans ce mode de réalisation, le réseau NET comporte un équipement de terminaison de réseau BX conforme à l'invention, le dispositif EqA décrit en référence aux figures 1 et 2, et le serveur SRV. Un terminal T' de l'art antérieur est connecté au réseau NET via le dispositif de terminaison de réseau BX.

L'équipement de terminaison de réseau BX, conforme à l'invention, est une passerelle entre le réseau NET et un réseau local comportant le terminal T'. Dans cette description, nous utilisons de façon équivalente les expressions « l'équipement de terminaison de réseau BX » et « la passerelle BX ». Cette passerelle BX dispose d'une fonction de traduction d'adresses.

Le terminal T' constitue un dispositif émetteur au sens de l'invention. Le serveur SRV constitue un dispositif destinataire au sens de l'invention.

La passerelle BX est configurée pour mettre en oeuvre le procédé de demande d'anonymisation conforme à l'invention.

La passerelle BX détecte (E100) une configuration pour demander d'anonymiser son adresse IP de son interface WAN (pour Wide Area Network en anglais) pour les paquets qu'elle reçoit des terminaux de son réseau local (y compris le terminal T') et qu'elle transfère au réseau NET.

La configuration peut avoir été effectuée par un opérateur du réseau NET. Alternativement, la configuration peut avoir été effectuée par un utilisateur de la passerelle BX ou du terminal T' connecté à la passerelle BX, par exemple via une plateforme de configuration de la passerelle BX.

Suite à la détection (E100) de la configuration, la passerelle BX insère (E104) l'information de marquage iMRK dans les entêtes des paquets IP qu'elle envoie vers le réseau NET.

Dans un autre mode, la passerelle BX est configurée pour mettre en oeuvre le procédé de demande d'anonymisation pour certains terminaux du réseau local, par exemple pour le terminal T' uniquement, et non pas tous les terminaux qui lui sont connectés. La passerelle BX n'insère l'information de marquage iMRK que dans les paquets IP qu'elle reçoit de ce terminal T', avant de les transmettre vers le réseau NET.

Dans un autre mode, la passerelle BX est configurée pour mettre en oeuvre le procédé de demande d'anonymisation pour les paquets IP qu'elle génère elle-même.

Le dispositif d'anonymisation EqA présenté sur la figure 5 met en oeuvre le procédé de traitement de demande d'anonymisation, le dispositif EqA et le procédé étant conformes à l'invention.

La **figure 6** illustre une architecture d'un réseau NET dans lequel le procédé de traitement de la demande peut être mis en oeuvre selon un quatrième mode de réalisation de l'invention.

Le réseau NET permet de connecter un terminal T' de l'art antérieur au serveur SRV. Un équipement d'anonymisation EqA conforme à l'invention est placé dans le réseau NET, en coupure de flux entre le terminal T' et le serveur SRV.

Dans le mode décrit ici, le terminal T' ne met pas en oeuvre un procédé de demande d'anonymisation conforme à l'invention. Le réseau NET est un réseau cellulaire, par exemple de type 4G (4ème génération).

Dans le mode décrit ici, le dispositif d'anonymisation EqA est un routeur de type PGW qui dispose d'une fonction PCEF (pour « Policy and Charging Enforcement Function » en anglais).

Lorsque le dispositif EqA reçoit un paquet P du terminal T', il interroge sa base de données interne DB-EqA, en fournissant par exemple l'adresse @T' du terminal T' pour récupérer des informations sur l'abonnement de l'utilisateur du terminal T'. La base de données DB-EqA est mise à jour lors de la création du nom de point d'accès, APN Internet, utilisé par l'application du terminal T' ayant généré le paquet IP, P. Cette mise à jour comporte une copie d'informations techniques obtenues à partir d'une base de données de type SPR connectée à un dispositif de type PCRF, lui-même connecté à la fonction PCEF du routeur PGW (constituant le dispositif d'anonymisation EqA).

Dans cet exemple, nous supposons que l'utilisateur du terminal T' a souscrit à un service d'anonymisation d'adresse IP source pour le trafic IP généré par son terminal T'. En interrogeant sa base de données DB-EqA, le dispositif EqA détermine que l'adresse IP du terminal T' doit être anonymisée.

Le dispositif EqA met alors en oeuvre la suite des étapes du procédé de traitement de demande conforme à l'invention:
- si le dispositif EqA dispose d'une fonction de traduction d'adresse, cet équipement EqA anonymise l'adresse IP source des paquets reçus du terminal T' puis les route vers le serveur SRV; et
- si le dispositif EqA ne dispose pas de fonction de traduction d'adresse, cet équipement EqA route les paquets reçus du terminal T' vers le serveur SRV via un équipement du réseau qui lui, dispose d'une fonction de traduction d'adresse.

Dans cet exemple, le dispositif d'anonymisation EqA est un routeur de type PGW qui dispose d'une fonction de traduction d'adresses, il procède alors lui-même à l'anonymisation de l'adresse IP source du terminal T'.

La base de données SPR peut comporter en outre des informations que le dispositif EqA interprète en tant que demandes pour anonymiser en outre le numéro de port IP source des paquets IP émis par le terminal T', et/ou pour anonymiser un ou plusieurs paramètres d'une couche applicative encapsulée dans des paquets IP émis par le terminal T'. Pour rappel, les routeurs PGW existants disposent déjà de fonction DPI.

Dans les modes déjà décrits, le dispositif de destination des paquets est le serveur SRV. Alternativement, ce dispositif de destination peut être un terminal, ou un système comportant un équipement de terminaison de réseau de type passerelle et un terminal.

Si l'information de marquage iMRK est supprimée (E112, E115) de l'entête du paquet P, avant son arrivée au dispositif de destination SRV, ce dispositif de destination SRV ne saura pas que l'adresse IP source du paquet P a été anonymisée.

Dans un autre mode de réalisation de l'invention, l'information de marquage iMRK n'est pas supprimée avant que le paquet P soit reçu par le dispositif de destination SRV. Lorsqu'une adresse IP est anonymisée, elle est masquée pour une application installée sur le dispositif de destination SRV et/ou pour l'utilisateur du dispositif de destination. Dans ce mode, le dispositif de destination SRV peut mettre en oeuvre le procédé de traitement de demande conforme à l'invention, lorsqu'il détecte une information de marquage iMRK dans un entête d'un paquet qu'il reçoit, il ne fournit pas une information sur la présence de l'information de marquage iMRK ou l'adresse IP source du paquet IP à l'application et/ou à l'utilisateur de ce dispositif de destination SRV.

Les **figures 7A et 7B** représentent des architectures fonctionnelles, selon deux modes de réalisation de l'invention, du terminal T conforme à l'invention et décrit en référence aux figures 1 à 4.

Le terminal T est un équipement de terminaison de réseau de l'invention. Le terminal T est configuré pour demander une anonymisation d'une adresse IP source d'un paquet IP qu'il envoie via le réseau de communication NET à destination du serveur SRV.

Le terminal T comprend :
- un module de détection DTC configuré pour détecter une configuration pour demander l'anonymisation; et
- un module de demande INS configuré pour insérer, sur ladite détection, l'information de marquage iMRK dans un champ du paquet IP, cette information de marquage iMRK étant représentative de la demande d'anonymisation interprétable par un dispositif d'anonymisation conforme à l'invention (tels que les dispositifs EqA et EqA' décrits aux figures 1 et 3 ) et placé en coupure de flux entre le terminal T et le serveur SRV; et
- un module de communication COM configuré pour envoyer le paquet IP vers le serveur SRV.

Dans le mode illustré par la figure 7A, le module de détection DTC détecte la configuration à partir d'une application de configuration APP. Cette configuration concerne tout le trafic IP envoyé par le terminal ou par une application particulière installée sur le terminal T.

La passerelle BX décrite en référence à la figure 5 a une architecture fonctionnelle similaire à l'architecture du terminal T illustrée par la figure 7A.

Dans le mode illustré par la figure 7B, le module de détection DTC est compris dans la pile TCP/IP du terminal T. Lorsque l'utilisateur du terminal T utilise un protocole particulier, dans une requête Rq pour accéder à un site web via un navigateur web NAV du terminal T, la pile TCP/IP et plus spécifiquement le module de détection DTC détecte l'utilisation de ce protocole particulier. L'utilisation de ce protocole particulier est interprétée comme une configuration pour mettre en oeuvre le procédé de demande d'anonymisation conforme à l'invention.

Dans un mode de réalisation, le module de détection DTC est compris dans la pile protocolaire UDP/IP du terminal T, ou dans sa pile protocolaire SCTP/IP, ou dans une couche logicielle intermédiaire entre l'application ayant généré le paquet P et la pile protocolaire TCP/IP ou UDP/IP ou STCP/IP.

Dans un mode de réalisation, ce protocole particulier est suffixé avec la lettre « a ». Par exemple, pour l'accès à un serveur web, l'utilisateur souhaitant anonymiser sa requête web saisit « httpa » en lieu et place de « http ». Le protocole httpa est similaire au protocole http et a la terminaison "a" pour "anonyme". Ce protocole est utilisé pour configurer le terminal T pour mettre en oeuvre le procédé de demande d'anonymisation conforme à l'invention pour la requête Rq. Le même mécanisme peut s'appliquer pour l'ensemble des protocoles applicatifs tels que FTP, DNS, NTP, SIP, RTP, RTCP, SMTP, HTTPS, SIPS, SRTP, etc.

La passerelle BX décrite en référence à la figure 5 a une architecture fonctionnelle similaire à celles présentées sur les figures 7A et 7B.

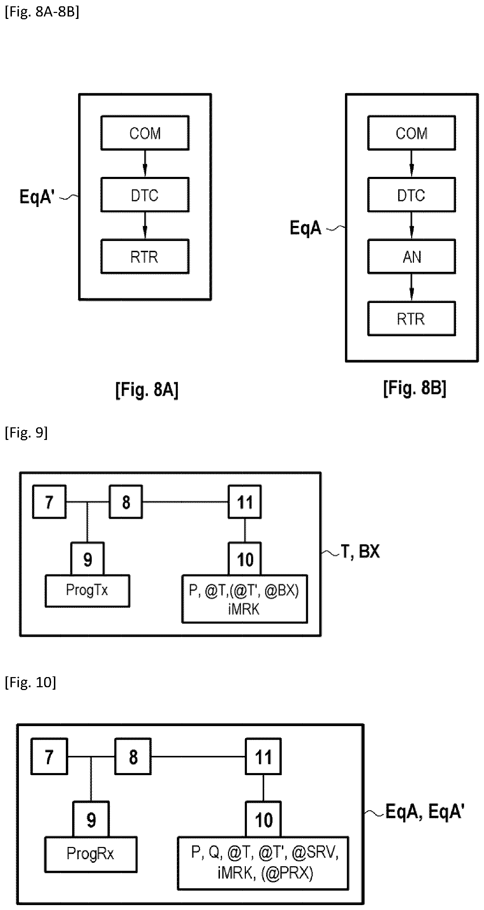

Les **figures 8A et 8B** illustrent des architectures fonctionnelles de dispositifs d'anonymisation conformes à l'invention.

La figure 8A illustre l'architecture fonctionnelle du dispositif d'anonymisation EqA' décrit en référence aux figures 3 et 4.

Le dispositif d'anonymisation EqA' est configuré pour traiter une demande d'anonymisation d'une adresse IP source d'un paquet IP, P, émis par un dispositif émetteur, tels que les terminaux T ou T', vers un dispositif destinataire tel que le serveur SRV via un réseau de communication NET, le dispositif émetteur est connecté au réseau NET via un équipement de terminaison de réseau, tels que le terminal T ou la passerelle BX, le dispositif d'anonymisation EqA' étant placé en coupure de flux entre l'équipement de terminaison de réseau T, BX et le dispositif destinataire SRV.

Le dispositif d'anonymisation EqA' comporte :
- un module de communication COM configuré pour recevoir le paquet IP, P ;
- un module de vérification DTC configuré pour déterminer si l'adresse IP source du paquet IP, P doit être anonymisée ou non; et
- un module de routage RTR configuré pour router le paquet IP vers le dispositif destinataire SRV, le paquet P étant routé via un équipement du réseau disposant d'une fonction de traduction d'adresses si le dispositif d'anonymisation EqA' ne dispose pas de fonction de traduction d'adresses et si et seulement si un résultat de ladite vérification est positif.

Rappelons que le dispositif EqA' ne dispose pas de fonction de traduction d'adresses, suite à un résultat positif de la vérification, le paquet IP, P est routé via un autre équipement du réseau disposant d'une fonction de traduction d'adresses, tel que le serveur proxy PRX.

La figure 8B illustre l'architecture fonctionnelle du dispositif d'anonymisation EqA décrit en référence aux figures 1 et 2.

L'architecture du dispositif EqA est similaire à celle du dispositif EqA', sauf que le dispositif EqA dispose d'une fonction de traduction d'adresses.

Le dispositif d'anonymisation EqA comporte un module de traduction d'adresses AN configuré pour remplacer, si et seulement si le résultat de la vérification est positif, l'adresse IP source (@T, @BX) par une adresse IP (@EqA) du dispositif d'anonymisation EqA.

Un équipement d'anonymisation conforme à l'invention peut être compris dans :
- un serveur de type BAS, Node Edge, MSAP ou PFA ;
- un routeur ;
- un équipement de type PGW;
- un serveur proxy ;
- un équipement de terminaison de réseau de type passerelle de destination;
- un serveur de destination; ou
- un terminal de destination.

Dans les modes de réalisation décrits ici, le terminal T (ou la passerelle BX) a l'architecture matérielle d'un ordinateur, telle qu'illustrée à la **figure 9****.**

L'architecture du terminal T ou de la passerelle BX comprend notamment un processeur 7, une mémoire vive 8, une mémoire morte 9, une mémoire flash non volatile 10 dans un mode particulier de réalisation de l'invention, ainsi que des moyens de communication 11. De tels moyens sont connus en soi et ne sont pas décrits plus en détail ici.

La mémoire morte 9 du terminal T ou de la passerelle BX selon l'invention constitue un support d'enregistrement conforme à l'invention, lisible par le processeur 7 et sur lequel est enregistré ici un programme d'ordinateur ProgTx conforme à l'invention.

La mémoire 10 du terminal T ou de la passerelle BX permet d'enregistrer des variables utilisées pour l'exécution des étapes du procédé de demande d'anonymisation selon l'invention, telles que le paquet IP, P, l'information de marquage iMRK. La mémoire 10 du terminal T permet d'enregistrer son adresse @T. La mémoire 10 de la passerelle BX permet d'enregistrer son adresse @BX et l'adresse @T' du terminal T'.

Le programme d'ordinateur ProgTx définit des modules fonctionnels et logiciels ici, configurés pour demander l'anonymisation de l'adresse IP du terminal T ou de la passerelle BX. Ces modules fonctionnels s'appuient sur et/ou commandent les éléments matériels 7-11 du terminal T ou de la passerelle BX cités précédemment.

Dans le mode de réalisation décrit ici, le dispositif d'anonymisation EqA ou EqA' a l'architecture matérielle d'un ordinateur, telle qu'illustrée à la **figure** 10.

L'architecture le dispositif d'anonymisation EqA ou EqA' comprend notamment un processeur 7, une mémoire vive 8, une mémoire morte 9, une mémoire flash non volatile 10 dans un mode particulier de réalisation de l'invention, ainsi que des moyens de communication 11. De tels moyens sont connus en soi et ne sont pas décrits plus en détail ici.

La mémoire morte 9 du dispositif d'anonymisation EqA ou EqA' selon l'invention constitue un support d'enregistrement conforme à l'invention, lisible par le processeur 7 et sur lequel est enregistré ici un programme d'ordinateur ProgRx conforme à l'invention.

La mémoire 10 du dispositif d'anonymisation EqA ou EqA' permet d'enregistrer des variables utilisées pour l'exécution des étapes du procédé de traitement d'une demande d'anonymisation selon l'invention, telles que les paquets P et Q, l'adresse @T du terminal T, l'adresse @T' du terminal T', l'adresse @SRV du serveur de destination SRV et l'information de marquage iMRK. La mémoire 10 du dispositif d'anonymisation EqA' permet d'enregistrer aussi l'adresse @PRX du serveur proxy PRX.

Le programme d'ordinateur ProgRx définit des modules fonctionnels et logiciels ici, configurés pour traiter une demande d'anonymisation. Ces modules fonctionnels s'appuient sur et/ou commandent les éléments matériels 7-11 du dispositif d'anonymisation EqA ou EqA' cités précédemment.

## Revendications

1. Procédé de traitement d'une demande d'anonymisation d'une adresse IP source d'un paquet IP émis par un dispositif émetteur (T, T') vers un dispositif destinataire (SRV) via un réseau de communication (NET), ledit dispositif émetteur étant connecté audit réseau (NET) via un équipement de terminaison de réseau (T, BX), ledit procédé étant mis en oeuvre par un dispositif dit d'anonymisation (EqA, EqA'), placé en coupure de flux entre ledit équipement de terminaison de réseau et ledit dispositif destinataire, ledit procédé comprenant :
- une étape de réception (E108) dudit paquet IP ;
- une étape de vérification (E110) pour déterminer si ladite adresse IP source dudit paquet doit être anonymisée ou non ;
- si un résultat de ladite vérification est négatif, une étape de routage dudit paquet IP vers ledit dispositif destinataire ;
- si le résultat de ladite vérification est positif et si ledit dispositif d'anonymisation (EqA) dispose d'une fonction de traduction d'adresses :
- une étape de remplacement (E114) de ladite adresse IP source (@T, @BX) par une adresse IP (@Eq) dudit dispositif d'anonymisation (EqA); et
- une étape de routage (E116) dudit paquet IP vers ledit dispositif destinataire ;
- si le résultat de ladite vérification est positif et si ledit dispositif d'anonymisation (EqA') ne dispose pas de fonction de traduction d'adresses, une étape de routage (E113a) dudit paquet IP vers ledit dispositif destinataire via un équipement (PRX) dudit réseau disposant d'une fonction de traduction d'adresses.

2. Procédé selon la revendication 1 dans lequel ladite étape (E110) de vérification comporte:
- une détection d'une information de marquage dans un champ dudit paquet IP, l'information de marquage étant représentative de ladite demande d'anonymisation ; ou
- une interrogation d'une base de données (DB-EqA) pour obtenir, à partir de ladite adresse IP source (@T, @BX) dudit paquet IP, une information de configuration relative à une souscription dudit dispositif émetteur à un service d'anonymisation de ladite adresse IP source ; ou
- une détermination que ladite adresse IP source dudit paquet IP doit être anonymisée s'il a été déterminé (E110) que l'adresse IP source d'un paquet IP précédent de la même session devrait être anonymisée ; ou
- une détermination que ladite adresse IP source dudit paquet IP doit être anonymisée s'il a été déterminé (E110) que l'adresse IP source d'un paquet IP précédent émis par ledit dispositif émetteur vers ledit dispositif destinataire devrait être anonymisée.

3. Procédé selon l'une des revendications 1 ou 2 comportant en outre au moins une étape parmi :
- une incrémentation d'un compteur de paquets IP comportant ladite information de marquage ;
- une suppression (E112) ou une modification de ladite information de marquage avant ledit routage (E116, E113a) ;
- une création d'un tunnel IP pour ledit routage (E116, E113a) dudit paquet IP;
- une mémorisation d'un paramètre d'une entête de couche applicative encapsulée dans ledit paquet IP, pour appliquer un traitement à d'autres paquets portant le même paramètre.

4. Procédé selon l'une des revendications 1 à 3 dans lequel ladite demande d'anonymisation d'une adresse IP source d'un paquet IP comporte en outre une demande d'anonymisation d'un paramètre d'une entête de couche applicative encapsulée dans ledit paquet IP, l'anonymisation dudit paramètre comportant une modification ou une suppression dudit paramètre, ledit procédé comportant en outre :
- si ledit dispositif d'anonymisation dispose d'une fonction de traitement d'entêtes de couches applicatives, une étape d'anonymisation du paramètre de l'entête de couche applicative; et
- si ledit dispositif d'anonymisation ne dispose pas de fonction de traitement d'entêtes de couches applicatives, une étape de routage dudit paquet IP vers ledit dispositif destinataire via un équipement dudit réseau disposant d'une fonction de traitement d'entêtes de couches applicatives.

5. Procédé de demande d'anonymisation d'une adresse IP source d'un paquet IP émis par un dispositif émetteur (T, T') vers un dispositif destinataire (SRV) via un réseau de communication (NET), ledit dispositif émetteur étant connecté audit réseau (NET) via un équipement de terminaison de réseau (T, BX), ledit procédé étant mis en oeuvre par ledit équipement de terminaison de réseau (T, BX) et comprenant :
- une étape de détection d'une configuration pour demander l'anonymisation;
- sur ladite détection, une étape d'insertion d'une information de marquage dans un champ dudit paquet IP, ladite information de marquage étant représentative de ladite demande d'anonymisation de ladite adresse IP source et interprétable par un dispositif, dit d'anonymisation, placé en coupure de flux entre ledit équipement de terminaison de réseau et ledit dispositif destinataire ; et
- une étape d'envoi dudit paquet IP à destination dudit dispositif destinataire (SRV);
ladite information de marquage étant indicative d'une demande d'un remplacement de l'adresse IP source par ledit dispositif d'anonymisation si le dispositif d'anonymisation dispose d'une fonction de traduction d'adresse ou un équipement (PRX) dudit réseau disposant d'une fonction de traduction d'adresses si ledit dispositif d'anonymisation ne dispose pas d'une fonction de traduction d'adresses.

6. Procédé selon la revendication 5 dans lequel ladite étape de détection d'une configuration comporte au moins une détection de :
- une utilisation d'un protocole spécifique (httpa) sur ledit dispositif émetteur pour émettre ledit paquet IP;
- une information de configuration dans un menu de configuration dudit équipement de terminaison de réseau ; ou
- une information de configuration dans une application installée sur ledit dispositif émetteur.

7. Procédé selon l'une des revendications 5 ou 6 dans lequel ladite information de marquage est insérée dans :
- le champ « Type de service » ou le champ « Drapeaux » ou le champ « options IP » d'une entête IPv4, lorsque ledit paquet est de type IPv4 ; ou
- le champ de type « Classe de trafic » ou « étiquette de flow » ou « entête d'extension» d'une entête IPv6, lorsque ledit paquet est de type IPv6 ; ou
- le champ « numéro de port source » d'une entête encapsulée dans ledit paquet, ladite information de marquage étant un numéro déterminé d'un port de communication, représentatif de ladite demande.

8. Procédé selon l'une des revendications 1 à 7 dans lequel ladite demande d'anonymisation d'une adresse IP source d'un paquet IP comporte en outre :
- une demande d'anonymisation d'un numéro de port source dudit paquet IP, l'anonymisation dudit numéro de port source comportant une modification dudit numéro ; et/ou
- une demande d'anonymisation d'un paramètre d'une entête de couche applicative encapsulée dans ledit paquet IP, l'anonymisation dudit paramètre comportant une modification ou une suppression dudit paramètre.

9. Procédé selon l'une des revendications 1 à 8 dans lequel ladite demande d'anonymisation d'une adresse IP source d'un paquet IP comporte une demande d'anonymisation pour :
- tout trafic IP émis par ledit dispositif émetteur ;
- tout trafic IP émis par ledit dispositif émetteur durant une même session que ledit paquet IP ;
- un trafic généré par une application dudit dispositif émetteur ; ou
- tout trafic émis par l'ensemble de dispositifs connectés audit réseau (NET) via ledit équipement de terminaison de réseau (BX).

10. Programme d'ordinateur (ProgTx, ProgRx) comportant des instructions pour l'exécution :
- des étapes du procédé de traitement d'une demande selon l'une quelconque des revendications 1 à 4 ou 8 à 9, ou
- des étapes du procédé de demande selon l'une quelconque des revendications 5 à 9, lorsque ledit programme est exécuté par un ordinateur.

11. Support d'enregistrement (7) lisible par un ordinateur sur lequel est enregistré un programme d'ordinateur selon la revendication 10.

12. Dispositif d'anonymisation (EqA'), configuré pour traiter une demande d'anonymisation d'une adresse IP source d'un paquet IP émis par un dispositif émetteur (T, BX) vers un dispositif destinataire (SRV) via un réseau de communication (NET), ledit dispositif émetteur étant connecté audit réseau (NET) via un équipement de terminaison de réseau (T, BX), ledit dispositif d'anonymisation (EqA') étant placé en coupure de flux entre ledit équipement de terminaison de réseau et ledit dispositif destinataire, ledit dispositif d'anonymisation comprenant :
- un module de communication (COM) configuré pour recevoir ledit paquet IP ;
- un module de vérification (DTC) configuré pour déterminer si ladite adresse IP source dudit paquet IP doit être anonymisée ou non; et
- un module de routage (RTR) configuré pour
- si le résultat de ladite vérification est négatif, router ledit paquet IP vers ledit dispositif destinataire,
- si le résultat de ladite vérification est positif, et si le dispositif d'anonymisation (EqA) dispose d'une fonction de traduction d'adresses, remplacer ladite adresse IP source (@T, @BX) par une adresse IP (@Eq) dudit dispositif d'anonymisation (EqA) et router ledit paquet IP vers ledit dispositif destinataire
- si le résultat de ladite vérification est positif, et si le dispositif d'anonymisation ne dispose pas d'une fonction de traduction d'adresses, router ledit paquet IP vers ledit dispositif destinataire via un équipement (PRX) dudit réseau disposant d'une fonction de traduction d'adresses.

13. Dispositif d'anonymisation selon la revendication 12 comportant en outre un module (AN) de traduction d'adresses configuré pour remplacer ladite adresse IP source (@T, @BX) par une adresse IP (@EqA) dudit dispositif d'anonymisation (EqA).

14. Dispositif d'anonymisation selon l'une des revendications 12 ou 13 compris dans :
- un serveur de type BAS, Node Edge, MSAP ou PFA ;
- un routeur ;
- un équipement de type PGW;
- un serveur proxy ;
- un équipement de terminaison de réseau de type passerelle de destination;
- un serveur de destination; ou
- un terminal de destination.

15. Dispositif d'anonymisation selon l'une des revendications 12 à 14 comportant en outre un module de traitement d'entêtes de couches applicatives configuré pour modifier ou supprimer au moins un paramètre d'une entête de couche applicative encapsulée dans ledit paquet IP.

16. Système d'anonymisation (SA), configuré pour traiter une demande d'anonymisation d'une adresse IP source d'un paquet IP émis par un dispositif émetteur (T, BX) vers un dispositif destinataire (SRV) via un réseau de communication (NET), ledit dispositif émetteur étant connecté audit réseau (NET) via un équipement de terminaison de réseau (T, BX), ledit système d'anonymisation (SA) étant placé en coupure de flux entre ledit équipement de terminaison de réseau et ledit dispositif destinataire, et comprenant :
- un dispositif d'anonymisation (EqA') selon la revendication 12, ne disposant pas de fonction de traduction d'adresses ; et
- un équipement (PRX) dudit réseau disposant d'une fonction de traduction d'adresses.

17. Equipement de terminaison de réseau (T, BX) configuré pour demander une anonymisation d'une adresse IP source d'un paquet IP envoyé par un dispositif émetteur (T, T') vers un dispositif destinataire via un réseau de communication (NET), ledit dispositif émetteur étant connecté audit réseau (NET) via ledit équipement de terminaison de réseau (T, BX), ledit équipement de terminaison de réseau comprenant :
- un module de détection (DTC) configuré pour détecter une configuration pour demander l'anonymisation de ladite adresse IP source; et
- un module de demande (INS) configuré pour insérer, sur ladite détection, une information de marquage dans un champ dudit paquet IP, ladite information de marquage étant représentative de la demande d'anonymisation interprétable par un dispositif dit d'anonymisation (EqA', EqA) placé en coupure de flux entre ledit équipement de terminaison de réseau et ledit dispositif destinataire ; et
- un module de communication (COM) configuré pour envoyer ledit paquet IP à destination dudit dispositif destinataire (SRV)
- ladite information de marquage étant indicative d'une demande d'un remplacement de l'adresse IP source par
- ledit dispositif d'anonymisation si ledit dispositif d'anonymisation dispose d'une fonction de traduction d'adresse ou
- un équipement (PRX) dudit réseau disposant d'une fonction de traduction d'adresses si ledit dispositif d'anonymisation ne dispose pas d'une fonction de traduction d'adresses.

## Patentansprüche

1. Verfahren zur Verarbeitung einer Anforderung der Anonymisierung einer Quell-IP-Adresse eines IP-Pakets, das von einer Sendervorrichtung (T, T') zu einer Empfängervorrichtung (SRV) über ein Kommunikationsnetz (NET) gesendet wird, wobei die Sendervorrichtung mit dem Netz (NET) über eine Netzabschlusseinrichtung (T, BX) verbunden ist, wobei das Verfahren von einer sogenannten Anonymisierungsvorrichtung (EqA, EqA') ausgeführt wird, die in Unterbrechung des Flusses zwischen der Netzabschlusseinrichtung und der Empfängervorrichtung angeordnet ist, wobei das Verfahren umfasst:
- einen Schritt des Empfangens (E108) des IP-Pakets;
- einen Schritt des Überprüfens (E110), um zu ermitteln, ob die Quell-IP-Adresse des Pakets anonymisiert werden soll oder nicht;
- wenn ein Ergebnis der Überprüfung negativ ist, einen Schritt des Weiterleitens des IP-Pakets zu der Empfängervorrichtung;
- wenn das Ergebnis der Überprüfung positiv ist und wenn die Anonymisierungsvorrichtung (EqA) über eine Adressübersetzungsfunktion verfügt:
- einen Schritt des Ersetzens (E114) der Quell-IP-Adresse (@T, @BX) durch eine IP-Adresse (@Eq) der Anonymisierungsvorrichtung (EqA); und
- einen Schritt des Weiterleitens (E116) des IP-Pakets zu der Empfängervorrichtung;
- wenn das Ergebnis der Überprüfung positiv ist und wenn die Anonymisierungsvorrichtung (EqA') nicht über eine Adressübersetzungsfunktion verfügt, einen Schritt des Weiterleitens (E113a) des IP-Pakets zu der Empfängervorrichtung über eine Einrichtung (PRX) des Netzes, die über eine Adressübersetzungsfunktion verfügt.

2. Verfahren nach Anspruch 1, wobei der Schritt (E110) des Überprüfens umfasst:
- ein Detektieren einer Kennzeichnungsinformation in einem Feld des IP-Pakets, wobei die Kennzeichnungsinformation für eine Anforderung der Anonymisierung repräsentativ ist; oder
- ein Abfragen einer Datenbank (DB-EqA), um ausgehend von der Quell-IP-Adresse (@T, @BX) des IP-Pakets eine Konfigurationsinformation bezüglich eines Abonnements der Sendervorrichtung bei einem Anonymisierungsdienst für die Quell-IP-Adresse zu erhalten; oder
- ein Ermitteln, dass die Quell-IP-Adresse des IP-Pakets anonymisiert werden soll, wenn ermittelt worden ist (E110), dass die Quell-IP-Adresse eines vorausgegangenen IP-Pakets derselben Sitzung anonymisiert werden sollte; oder
- ein Ermitteln, dass die Quell-IP-Adresse des IP-Pakets anonymisiert werden soll, wenn ermittelt worden ist (E110), dass die Quell-IP-Adresse eines vorausgegangenen IP-Pakets, das von der Sendevorrichtung zu der Empfängervorrichtung gesendet wurde, anonymisiert werden sollte.

3. Verfahren nach einem der Ansprüche 1 oder 2, umfassend ferner mindestens einen Schritt unter:
- einem Inkrementieren eines IP-Paket-Zählers, der die Kennzeichnungsinformation umfasst;
- einem Löschen (E112) oder einem Ändern der Kennzeichnungsinformation vor dem Weiterleiten (E116, E113a);
- einem Erstellen eines IP-Tunnels zum Weiterleiten (E116, E113a) des IP-Pakets;
- einem Speichern eines Parameters eines Anwendungsschicht-Headers, der in das IP-Paket eingekapselt ist, um eine Verarbeitung auf weitere Pakete anzuwenden, die denselben Parameter tragen.

4. Verfahren nach einem der Ansprüche 1 bis 3, wobei die Anforderung der Anonymisierung einer Quell-IP-Adresse eines IP-Pakets ferner eine Anforderung der Anonymisierung eines Parameters eines Anwendungsschicht-Headers, der in das IP-Paket eingekapselt ist, umfasst, wobei die Anonymisierung des Parameters ein Ändern oder ein Löschen des Parameters umfasst, wobei das Verfahren ferner umfasst:
- wenn die Anonymisierungsvorrichtung über eine Anwendungsschicht-Header-Verarbeitungsfunktion verfügt, einen Schritt des Anonymisierens des Parameters des Anwendungsschicht-Headers; und
- wenn die Anonymisierungsvorrichtung nicht über eine Anwendungsschicht-Header-Verarbeitungsfunktion verfügt, einen Schritt des Weiterleitens des IP-Pakets zu der Empfängervorrichtung über eine Einrichtung des Netzes, die über eine Anwendungsschicht-Header-Verarbeitungsfunktion verfügt.

5. Verfahren zur Anforderung der Anonymisierung einer Quell-IP-Adresse eines IP-Pakets, das von einer Sendervorrichtung (T, T') zu einer Empfängervorrichtung (SRV) über ein Kommunikationsnetz (NET) gesendet wird, wobei die Sendervorrichtung mit dem Netz (NET) über eine Netzabschlusseinrichtung (T, BX) verbunden ist, wobei das Verfahren von der Netzabschlusseinrichtung (T, BX) ausgeführt wird und umfasst:
- einen Schritt des Detektierens einer Konfiguration zum Anfordern der Anonymisierung;
- bei diesem Detektieren einen Schritt des Einfügens einer Kennzeichnungsinformation in ein Feld des IP-Pakets, wobei die Kennzeichnungsinformation für die Anforderung der Anonymisierung der Quell-IP-Adresse repräsentativ ist und von einer sogenannten Anonymisierungsvorrichtung, die in Unterbrechung des Flusses zwischen der Netzabschlusseinrichtung und der Empfängervorrichtung angeordnet ist, interpretierbar ist; und
- einen Schritt des Sendens des IP-Pakets an die Empfängervorrichtung (SRV); wobei die Kennzeichnungsinformation auf eine Anforderung einer Ersetzung der Quell-IP-Adresse durch die Anonymisierungsvorrichtung hinweist, wenn die Anonymisierungsvorrichtung über eine Adressübersetzungsfunktion verfügt, oder eine Einrichtung (PRX) des Netzes, die über eine Adressübersetzungsfunktion verfügt, wenn die Anonymisierungsvorrichtung nicht über eine Adressübersetzungsfunktion verfügt.

6. Verfahren nach Anspruch 5, wobei der Schritt des Detektierens einer Konfiguration mindestens ein Detektieren umfasst von:
- einer Verwendung eines spezifischen Protokolls (httpa) auf der Sendervorrichtung zum Senden des IP-Pakets;
- einer Konfigurationsinformation in einem Konfigurationsmenü der Netzabschlusseinrichtung; oder
- einer Konfigurationsinformation in einer Anwendung, die auf der Sendervorrichtung installiert ist.

7. Verfahren nach einem der Ansprüche 5 oder 6, wobei die Kennzeichnungsinformation eingefügt wird in:
- das Feld "Type of service" oder das Feld "Flags" oder das Feld "IP Options" eines IPv4-Headers, wenn das Paket vom Typ IPv4 ist; oder
- das Feld vom Typ "Traffic class" oder "Flow label" oder "Header-Erweiterungen" eines IPv6-Headers, wenn das Paket vom Typ IPv6 ist; oder
- das Feld "Quell-Port-Nummer" eines Headers, der in das Paket eingekapselt ist, wobei die Kennzeichnungsinformation eine bestimmte Nummer eines Kommunikationsports ist, die für die Anforderung repräsentativ ist.

8. Verfahren nach einem der Ansprüche 1 bis 7, wobei die Anforderung der Anonymisierung einer Quell-IP-Adresse eines IP-Pakets ferner umfasst:
- eine Anforderung der Anonymisierung einer Quell-Port-Nummer des IP-Pakets, wobei die Anonymisierung der Quell-Port-Nummer ein Ändern der Nummer umfasst; und/oder
- eine Anforderung der Anonymisierung eines Parameters eines Anwendungsschicht-Headers, der in das IP-Paket eingekapselt ist, wobei die Anonymisierung des Parameters ein Ändern oder ein Löschen des Parameters umfasst.

9. Verfahren nach einem der Ansprüche 1 bis 8, wobei die Anforderung der Anonymisierung einer Quell-IP-Adresse eines IP-Pakets eine Anforderung der Anonymisierung umfasst für:
- den gesamten IP-Verkehr, der von der Sendervorrichtung gesendet wird;
- den gesamten IP-Verkehr, der von der Sendervorrichtung während einer selben Sitzung wie der des IP-Pakets gesendet wird;
- einen Verkehr, der von einer Anwendung der Sendervorrichtung generiert wird; oder
- den gesamten Verkehr, der von der Gesamtheit von Vorrichtungen gesendet wird, die über die Netzabschlusseinrichtung (BX) mit dem Netz (NET) verbunden sind.

10. Computerprogramm (ProgTx, ProgRx), das Anwendungen umfasst zur Ausführung:
- der Schritte des Verfahrens zur Verarbeitung einer Anforderung nach einem der Ansprüche 1 bis 4 oder 8 bis 9, oder
- der Schritt des Verfahrens zur Anforderung nach einem der Ansprüche 5 bis 9, wenn das Programm von einem Computer ausgeführt wird.

11. Computerlesbares Speichermedium (7), auf dem ein Computerprogramm nach Anspruch 10 gespeichert ist.

12. Anonymisierungsvorrichtung (EqA'), die dazu ausgestaltet ist, eine Anforderung der Anonymisierung einer Quell-IP-Adresse eines IP-Pakets zu verarbeiten, das von einer Sendervorrichtung (T, BX) zu einer Empfängervorrichtung (SRV) über ein Kommunikationsnetz (NET) gesendet wird, wobei die Sendervorrichtung mit dem Netz (NET) über eine Netzabschlusseinrichtung (T, BX) verbunden ist, wobei die Anonymisierungsvorrichtung (EqA') in Unterbrechung des Flusses zwischen der Netzabschlusseinrichtung und der Empfängervorrichtung angeordnet ist, wobei die Anonymisierungsvorrichtung umfasst:
- ein Kommunikationsmodul (COM), das dazu ausgestaltet ist, das IP-Paket zu empfangen;
- Überprüfungsmodul (DTC), das dazu ausgestaltet ist zu ermitteln, ob die Quell-IP-Adresse des IP-Pakets anonymisiert werden soll oder nicht;
- ein Weiterleitungsmodul (RTR), das dazu ausgestaltet ist,
- wenn das Ergebnis der Überprüfung negativ ist, das IP-Paket zu der Empfängervorrichtung weiterzuleiten;
- wenn das Ergebnis der Überprüfung positiv ist und wenn die Anonymisierungsvorrichtung (EqA) über eine Adressübersetzungsfunktion verfügt, die Quell-IP-Adresse (@T, @BX) durch eine IP-Adresse (@Eq) der Anonymisierungsvorrichtung (EqA) zu ersetzen und das IP-Paket zu der Empfängervorrichtung weiterzuleiten
- wenn das Ergebnis der Überprüfung positiv ist und wenn die Anonymisierungsvorrichtung nicht über eine Adressübersetzungsfunktion verfügt, das IP-Paket zu der Empfängervorrichtung über eine Einrichtung (PRX) des Netzes weiterzuleiten, die über eine Adressübersetzungsfunktion verfügt.

13. Anonymisierungsvorrichtung nach Anspruch 12, umfassend ferner ein Adressübersetzungsmodul (AN), das dazu ausgestaltet ist, die Quell-IP-Adresse (@T, @BX) durch eine IP-Adresse (@EqA) der Anonymisierungsvorrichtung (EqA) zu ersetzen.

14. Anonymisierungsvorrichtung nach einem der Ansprüche 12 oder 13, die enthalten ist in:
- einem Server vom Typ BAS, Node Edge, MSAP oder PFA;
- einem Router;
- einer Einrichtung vom Typ PGW;
- einem Proxy-Server;
- einer Netzabschlusseinrichtung vom Typ Ziel-Gateway;
- einem Ziel-Server; oder
- einem Ziel-Endgerät.

15. Anonymisierungsvorrichtung nach einem der Ansprüche 12 bis 14, umfassend ferner ein Anwendungsschicht-Header-Verarbeitungsmodul, das dazu ausgestaltet ist, mindestens einen Parameter eines Anwendungsschicht-Headers, der in das IP-Paket eingekapselt ist, zu ändern oder zu löschen.

16. Anonymisierungssystem (SA), das dazu ausgestaltet ist, eine Anforderung der Anonymisierung einer Quell-IP-Adresse eines IP-Pakets zu verarbeiten, das von einer Sendervorrichtung (T, BX) zu einer Empfängervorrichtung (SRV) über ein Kommunikationsnetz (NET) gesendet wird, wobei die Sendervorrichtung mit dem Netz (NET) über eine Netzabschlusseinrichtung (T, BX) verbunden ist, wobei das Anonymisierungssystem (SA) in Unterbrechung des Flusses zwischen der Netzabschlusseinrichtung und der Empfängervorrichtung angeordnet ist und umfasst:
- eine Anonymisierungsvorrichtung (EqA') nach Anspruch 12, die nicht über eine Adressübersetzungsfunktion verfügt; und
- eine Einrichtung (PRX) des Netzes, die über eine Adressübersetzungsfunktion verfügt.

17. Netzabschlusseinrichtung (T, BX), die dazu ausgestaltet ist, eine Anonymisierung einer Quell-IP-Adresse eines IP-Pakets anzufordern, das von einer Sendervorrichtung (T, T') zu einer Empfängervorrichtung über ein Kommunikationsnetz (NET) gesendet wird, wobei die Sendervorrichtung mit dem Netz (NET) über die Netzabschlusseinrichtung (T, BX) verbunden ist, wobei die Netzabschlusseinrichtung (T, BX) umfasst:
- ein Detektionsmodul (DTC), das dazu ausgestaltet ist, eine Konfiguration zum Anfordern der Anonymisierung der Quell-IP-Adresse zu detektieren; und
- ein Anforderungsmodul (INS), das dazu ausgestaltet ist, bei dem Detektieren eine Kennzeichnungsinformation in ein Feld des IP-Pakets einzufügen, wobei die Kennzeichnungsinformation für die Anforderung der Anonymisierung repräsentativ ist, die von einer sogenannten Anonymisierungsvorrichtung (EqA', EqA) interpretierbar ist, die in Unterbrechung des Flusses zwischen der Netzabschlusseinrichtung und der Empfängervorrichtung angeordnet ist; und
- ein Kommunikationsmodul (COM), das dazu ausgestaltet ist, das IP-Paket an die Empfängervorrichtung (SRV) zu senden
- wobei die Kennzeichnungsinformation auf eine Anforderung einer Ersetzung der Quell-IP-Adresse hinweist durch
- die Anonymisierungsvorrichtung, wenn die Anonymisierungsvorrichtung über eine Adressübersetzungsfunktion verfügt, oder
- eine Einrichtung (PRX) des Netzes, die über eine Adressübersetzungsfunktion verfügt, wenn die Anonymisierungsvorrichtung nicht über eine Adressübersetzungsfunktion verfügt.

## Claims

1. Method for processing a request to anonymize a source IP address of an IP packet sent by a sender device (T, T') to a recipient device (SRV) via a communication network (NET), said sender device being connected to said network (NET) via a network termination equipment (T, BX), said method being implemented by a device referred to as an anonymization device (EqA, EqA'), placed so as to interrupt the flow between said network termination equipment and said recipient device, said method comprising:
- a step (E108) of receiving said IP packet;
- a step (E110) of verifying in order to determine whether or not said source IP address of said packet has to be anonymized;
- if a result of said verification is negative, a step of routing said IP packet to said recipient device;
- if the result of said verification is positive and if said anonymization device (EqA) has an address translation function:
- a step (E114) of replacing said source IP address (@T, @BX) with an IP address (@Eq) of said anonymization device (EqA); and
- a step (E116) of routing said IP packet to said recipient device;
- if the result of said verification is positive and if said anonymization device (EqA') does not have an address translation function, a step (E113a) of routing said IP packet to said recipient device via an equipment (PRX) of said network having an address translation function.

2. Method according to Claim 1, wherein said verification step (E110) comprises:
- detecting marking information in a field of said IP packet, the marking information being representative of said anonymization request; or
- interrogating a database (DB-EqA) in order to obtain, on the basis of said source IP address (@T, @BX) of said IP packet, configuration information relating to a subscription of said sender device to a service for anonymizing said source IP address; or
- determining that said source IP address of said IP packet has to be anonymized if it has been determined (E110) that the source IP address of a preceding IP packet of the same session should be anonymized; or
- determining that said source IP address of said IP packet has to be anonymized if it has been determined (E110) that the source IP address of a preceding IP packet sent by said sender device to said recipient device should be anonymized.

3. Method according to one of Claims 1 and 2, further comprising at least one step from among:
- incrementing a counter of IP packets comprising said marking information;
- deleting (E112) or modifying said marking information before said routing (E116, E113a);
- creating an IP tunnel for said routing (E116, E113a) of said IP packet;
- storing a parameter of an application-layer header encapsulated in said IP packet, in order to apply processing to other packets carrying the same parameter.

4. Method according to one of Claims 1 to 3, wherein said request to anonymize a source IP address of an IP packet further comprises a request to anonymize a parameter of an application-layer header encapsulated in said IP packet, anonymizing said parameter comprising modifying or deleting said parameter, said method further comprising:
- if said anonymization device has an application-layer header processing function, a step of anonymizing the parameter of the application-layer header; and
- if said anonymization device does not have an application-layer header processing function, a step of routing said IP packet to said recipient device via an equipment of said network having an application-layer header processing function.

5. Method for requesting to anonymize a source IP address of an IP packet sent by a sender device (T, T') to a recipient device (SRV) via a communication network (NET), said sender device being connected to said network (NET) via a network termination equipment (T, BX), said method being implemented by said network termination equipment (T, BX) and comprising:
- a step of detecting a configuration to request anonymization;
- upon said detection, a step of inserting marking information into a field of said IP packet, said marking information being representative of said request to anonymize said source IP address and able to be interpreted by a device, referred to as an anonymization device, placed so as to interrupt the flow between said network termination equipment and said recipient device; and
- a step of sending said IP packet to said recipient device (SRV); said marking information being indicative of a request for the source IP address to be replaced by said anonymization device if the anonymization device has an address translation function or an equipment (PRX) of said network having an address translation function if said anonymization device does not have an address translation function.

6. Method according to Claim 5, wherein said step of detecting a configuration comprises at least detecting:
- a use of a specific protocol (httpa) on said sender device in order to send said IP packet;
- configuration information in a configuration menu of said network termination equipment; or
- configuration information in an application installed on said sender device.

7. Method according to one of Claims 5 and 6, wherein said marking information is inserted into:
- the "Service type" field or the "Flags" field or the "IP options" field of an IPv4 header, when said packet is of IPv4 type; or
- the "Traffic class" or "flow label" or "extension header" field of an IPv6 header, when said packet is of IPv6 type; or
- the "source port number" field of a header encapsulated in said packet, said marking information being a determined number of a communication port, which is representative of said request.

8. Method according to one of Claims 1 to 7, wherein said request to anonymize a source IP address of an IP packet further comprises:
- a request to anonymize a source port number of said IP packet, anonymizing said source port number comprising modifying said number; and/or
- a request to anonymize a parameter of an application-layer header encapsulated in said IP packet, anonymizing said parameter comprising modifying or deleting said parameter.

9. Method according to one of Claims 1 to 8, wherein said request to anonymize a source IP address of an IP packet comprises an anonymization request for:
- all IP traffic sent by said sender device;
- all IP traffic sent by said sender device during the same session as said IP packet;
- traffic generated by an application of said sender device; or
- all traffic sent by the set of devices connected to said network (NET) via said network termination equipment (BX).

10. Computer program (ProgTx, ProgRx) comprising instructions for executing:
- the steps of the method for processing a request according to any one of Claims 1 to 4 or 8 and 9, or
- the steps of the requesting method according to any one of Claims 5 to 9, when said program is executed by a computer.

11. Computer-readable storage medium (7) on which a computer program according to Claim 10 is stored.

12. Anonymization device (EqA'), configured to process a request to anonymize a source IP address of an IP packet sent by a sender device (T, BX) to a recipient device (SRV) via a communication network (NET), said sender device being connected to said network (NET) via a network termination equipment (T, BX), said anonymization device (EqA') being placed so as to interrupt the flow between said network termination equipment and said recipient device, said anonymization device comprising:
- a communication module (COM) configured to receive said IP packet;
- a verification module (DTC) configured to determine whether or not said source IP address of said IP packet has to be anonymized; and
- a routing module (RTR) configured to
- if the result of said verification is negative, route said IP packet to said recipient device,
- if the result of said verification is positive, and if the anonymization device (EqA) has an address translation function, replace said source IP address (@T, @BX) with an IP address (@Eq) of said anonymization device (EqA) and route said IP packet to said recipient device,
- if the result of said verification is positive, and if the anonymization device does not have an address translation function, route said IP packet to said recipient device via an equipment (PRX) of said network having an address translation function.

13. Anonymization device according to Claim 12, further comprising an address translation module (AN) configured to replace said source IP address (@T, @BX) with an IP address (@EqA) of said anonymization device (EqA) .

14. Anonymization device according to one of Claims 12 and 13, comprised in:
- a BAS, Node Edge, MSAP or PFA server;
- a router;
- a PGW equipment;
- a proxy server;
- a network termination equipment of destination gateway type;
- a destination server; or
- a destination terminal.

15. Anonymization device according to one of Claims 12 to 14, further comprising a module for processing application-layer headers which is configured to modify or delete at least one parameter of an application-layer header encapsulated in said IP packet.

16. Anonymization system (SA), configured to process a request to anonymize a source IP address of an IP packet sent by a sender device (T, BX) to a recipient device (SRV) via a communication network (NET), said sender device being connected to said network (NET) via a network termination equipment (T, BX), said anonymization system (SA) being placed so as to interrupt the flow between said network termination equipment and said recipient device and comprising:
- an anonymization device (EqA') according to Claim 12, not having an address translation function; and
- an equipment (PRX) of said network having an address translation function.

17. Network termination equipment (T, BX) configured to request for a source IP address of an IP packet sent by a sender device (T, T') to a recipient device via a communication network (NET) to be anonymized, said sender device being connected to said network (NET) via said network termination equipment (T, BX), said network termination equipment comprising:
- a detection module (DTC) configured to detect a configuration to request for said source IP address to be anonymized; and
- a requesting module (INS) configured to insert, upon said detection, marking information into a field of said IP packet, said marking information being representative of the anonymization request which can be interpreted by a device referred to as an anonymization device (EqA', EqA) placed so as to interrupt the flow between said network termination equipment and said recipient device; and
- a communication module (COM) configured to send said IP packet to said recipient device (SRV),
- said marking information being indicative of a request for the source IP address to be replaced by
- said anonymization device if said anonymization device has an address translation function or
- an equipment (PRX) of said network having an address translation function if said anonymization device does not have an address translation function.
